(19) Europäisches Patentamt / European Patent Office / Office européen des brevets

(11) **EP 3 829 767 B1**

(12) # EUROPÄISCHE PATENTSCHRIFT

(45) Veröffentlichungstag und Bekanntmachung des Hinweises auf die Patenterteilung:
**21.09.2022 Patentblatt 2022/38**

(21) Anmeldenummer: **19750091.1**

(22) Anmeldetag: **30.07.2019**

(51) Internationale Patentklassifikation (IPC):
***B01L 3/00*** *(2006.01)* ***G01N 1/40*** *(2006.01)*
***G01N 35/00*** *(2006.01)*

(52) Gemeinsame Patentklassifikation (CPC):
**B01L 3/502753; B01L 3/50273;** B01L 2300/023; B01L 2300/069; B01L 2300/0803; B01L 2300/0806; B01L 2300/0864; B01L 2400/0409; B01L 2400/086; G01N 1/4077

(86) Internationale Anmeldenummer:
**PCT/EP2019/070530**

(87) Internationale Veröffentlichungsnummer:
**WO 2020/025630 (06.02.2020 Gazette 2020/06)**

(54) **VORRICHTUNG UND VERFAHREN ZUM LEITEN EINER FLÜSSIGKEIT DURCH EIN PORÖSES MEDIUM**

DEVICE AND METHOD FOR GUIDING A LIQUID THROUGH A POROUS MEDIUM

DISPOSITIF ET PROCÉDÉ DESTINÉS À CONDUIRE UN LIQUIDE À TRAVERS UN MILIEU POREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2018 DE 102018212930**

(43) Veröffentlichungstag der Anmeldung:
**09.06.2021 Patentblatt 2021/23**

(73) Patentinhaber: **Hahn-Schickard-Gesellschaft für angewandte Forschung e.V.**
**78052 Villingen-Schwenningen (DE)**

(72) Erfinder:
- **KAINZ, Daniel**
  **79110 Freiburg im Breisgau (DE)**
- **PAUST, Nils**
  **79115 Freiburg im Breisgau (DE)**
- **ZAHO, Yunpeng**
  **79292 Pfaffenweiler (DE)**
- **FRÜH, Susanna**
  **79106 Freiburg im Breisgau (DE)**

(74) Vertreter: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
**US-A1- 2001 048 895** **US-A1- 2014 190 903**
**US-A1- 2014 220 673**

- **PAUL VULTO ET AL: "Phaseguides: a paradigm shift in microfluidic priming and emptying", LAB ON A CHIP, Bd. 11, Nr. 9, 1. Januar 2011 (2011-01-01) , Seite 1596, XP055091039, ISSN: 1473-0197, DOI: 10.1039/c0lc00643b**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 829 767 B1

## Beschreibung

GEBIET

Die vorliegende Offenbarung befasst sich mit Vorrichtungen und Verfahren zum Leiten einer Flüssigkeit durch ein poröses Material und insbesondere Vorrichtungen und Verfahren zum Leiten einer Flüssigkeit durch ein poröses Material auf dem Gebiet der zentrifugalen Mikrofluidik bezüglich eines Rotationszentrums bzw. einer Rotationsachse in Richtung radial auswärts unter Verwendung der Zentrifugalkraft.

HINTERGRUND

Die zentrifugale Mikrofluidik beschäftigt sich mit der Handhabung von Flüssigkeiten im Femtoliter- bis Milliliter-Bereich in rotierenden Systemen. Solche Systeme sind meist Einwegkartuschen, bestehend aus einem Polymer, die in oder anstelle von Zentrifugenrotoren verwendet werden. Solche Kartuschen werden mit der Absicht entwickelt, Laborprozesse zu automatisieren. Standardlaborprozesse, wie Pipettieren, Zentrifugieren, Mischen oder Aliquotieren können in einer mikrofluidischen Kartusche, die auch als Fluidikmodul bezeichnet werden kann, implementiert werden. Zu diesem Zweck beinhalten die Kartuschen Fluidikstrukturen in Form von Kanälen für die Fluidführung sowie Kammern für das Auffangen von Flüssigkeiten. Durch die Beaufschlagung der Kartuschen mit einer vordefinierten Abfolge von Drehfrequenzen, dem sogenannten Frequenzprotokoll, können die in den Kartuschen befindlichen Flüssigkeiten durch die Zentrifugalkraft bewegt werden.

Die zentrifugale Mikrofluidik findet hauptsächlich in der Laboranalytik und in der mobilen Diagnostik Anwendung. Die bislang häufigste Ausführung von Kartuschen ist eine Zentrifugal-mikrofluidische Scheibe, die in speziellen Prozessiergeräten eingesetzt wird. Solche Scheiben sind unter anderem unter den Bezeichnungen "Lab-on-a-disk", "LabDisk" oder "Lab-on-CD" bekannt. Andere Formate, wie mikrofluidische Zentrifugenröhrchen, können in Rotoren bereits bestehender Standardlaborgeräten eingesetzt werden. Ein solches Zentrifugenröhrchen ist beispielsweise unter der Bezeichnung "LabTube" bekannt.

Etablierte und kostengünstig herzustellende Test zum Nachweis von Analyten in einer Analysenprobe, die als Festphase ein poröses Medium nutzen, sind sogenannte immunchromatographische Schnelltests (Lateral Flow Tests). Ein Beispiel ist ein Schwangerschaftstest unter Verwendung von Schwangerschaftsteststreifen. Poröse Medien haben ein hohes Verhältnis von Oberfläche zu Volumen und eignen sich daher besonders als Festphase für Oberflächenanbindungsreaktionen, wie sie etwa auf immunchromatographischen Teststreifen stattfinden. Der Fluss durch den Teststreifen wird über die Eigenschaften der porösen Medien, das im Falle von gewöhnlichen Teststreifen aus Nitrocellulose bestehen kann, bestimmt und kann durch die Wahl des porösen Mediums geringfügig reguliert werden. Darüber hinaus unterliegen die porösen Medien herstellungsbedingten Schwankungen, so dass die Flussraten zusätzlich je nach Batch bzw. Charge variieren können. Damit variiert auch die resultierende Inkubationszeit für die im Teststreifen reagierenden Biomoleküle, was wiederum zu unterschiedlichen Signalen bei der Auslese führen kann. Daher sind immunchromatographische Teststreifen in der Regel nur qualitativ oder semiquantitativ. Quantitative immunchromatographische Schnelltestsysteme erfordern lange Entwicklungszeiten und sind aufgrund von Qualitätsschwankungen gegebenenfalls fehleranfällig. Darüber hinaus können nur Biomoleküle mit schnellen Reaktionskinetiken verwendet werden, da die Inkubationszeiten im Teststreifen generell kurz sind.

Für die Entwicklung von reproduzierbaren, hoch sensitiven und quantitativen immunchromatographischen Schnelltests sollte der Durchfluss nicht von den intrinsischen Eigenschaften des porösen Mediums abhängig sein, sondern sollte idealerweise über eine extern regulierbare Kraft steuerbar sein. Jedoch ist eine Integrierung einer extern regulierbaren Flusskontrolle in regulären immunchromatographischen Schnelltests nicht möglich.

Zentrifugal mikrofluidische Plattformen können hier die Möglichkeit einer Flusskontrolle durch ein poröses Medium bieten. Es gibt insbesondere zwei Ansätze für die Integration eines zu durchfließenden, porösen Mediums in ein zentrifugales Fluidikmodul, das um ein Rotationszentrum drehbar ist. Ein erster Ansatz besteht in einem Durchfluss einer Flüssigkeit durch das poröse Medium bezüglich des Rotationszentrums in Richtung radial auswärts. Ein zweiter Ansatz besteht in einem Durchfluss einer Flüssigkeit durch das poröse Medium bezüglich des Rotationszentrums nach radial einwärts.

Strukturen und Verfahren, welche ein poröses Medium im zentrifugalen Schwerefeld von einer Flüssigkeit durchfließen lassen, sind bereits bekannt.

Hyundoo Hwang u.a., "Paper on a disc: balancing the capillary-driven flow with a centrifugal force", Lab Chip, 2011, 3404 - 3406, beschreiben ein Integrationskonzept, bei dem ein poröses Medium nach radial einwärts durchflossen wird und das von der Funktionsweise her vergleichbar mit immunchromatographischen Teststreifen ist, da die antreibende Kraft die Kapillarität des porösen Mediums ist. Das beschriebene Konzept erlaubt es jedoch, den kapillar getriebenen Fluss durch das poröse Medium abzubremsen, indem die Zentrifugalkraft der Kapillarkraft entgegenwirkt. Als poröses Medium werden in Rotationsscheiben chromatographische Membranen (Nitrocellulose) eingebracht. Die Membranstreifen sind in radialer Richtung in die Disk eingeklebt. Die Probe wird an einer radial außen liegenden Position aufgegeben und wandert aufgrund der Kapillarität des porösen Mediums nach radial innen und kann nun zentrifugal abgebremst, gestoppt oder in die entgegengesetzte Richtung zurückgedrückt werden. Durch das Abbremsen kann die Inkubationszeit erhöht und eine mögliche Signalverstärkung erzielt werden. Darüber hinaus leiten die Autoren ein physikalisches Modell ab, um den Füllstand der Membran frequenzabhängig vorherzusagen. Mit diesem Modell lässt sich die kontinuierliche Anpassung der Frequenz während der Prozessierung berechnen, um eine konstante Durchflussrate durch die Membranen zu erzielen, wobei hier ebenfalls der limitierende Faktor die Kapillarität des porösen Mediums ist.

Sascha Lutz u.a., "A fully integrated microfluidic platform for highly sensitive analysis of immunochemical parameters", Analyst, 2017, 142, 4206 - 4214, beschreiben ein zentrifugales Fluidikmodul, mit dem ein hochsensitiver Immunoassay durchgeführt wird. Als Festphase für die Fängerantikörper wird als poröses Medium Nitrocellulose verwendet, das in Richtung radial einwärts kapillar durchflossen wird. Während des Assays wird die Flussrate durch das poröse Medium konstant mit einer Drehung bei einer Drehfrequenz von 5 Hz abgebremst. In dem beschriebenen Fluidikmodul wird zusätzlich zur mit Fängerantikörpern funktionalisierten Membran ein sogenanntes Waste-Vlies (Reststoff-Vlies) eingesetzt, um Waschflüssigkeiten, die zusätzlich zur zu analysierenden Probe prozessiert werden, ebenfalls kapillar durch die Nitrocellulosemembran zu ziehen und radial innerhalb der Membran aufzunehmen.

Die WO 2009/039239 A2 beschreibt ein System zum Detektieren von Analyten in einer Analysenprobe mit Hilfe einer Lateralflusseinheit im zentrifugalen Schwerefeld. Flüssigkeit wird direkt auf das poröse Medium aufgebracht. Zwei unterschiedliche Verfahren sind beschrieben, wobei bei einem ersten Verfahren ein poröses Trägermaterial nach radial innen (einwärts) durchflossen wird, und bei einem zweiten Verfahren ein poröses Medium nach radial außen (auswärts) durchflossen wird. Im ersten Fall wird der Fluss durch das Anlegen einer Zentrifugalkraft abgebremst. Im zweiten Fall wird der kapillar getriebene Fluss zentrifugal unterstützt. In beiden Fällen wird die Zentrifugalkraft zusammen mit der Kapillarkraft betrachtet.

Die US 2007/0054270 A1 offenbart eine mikrofluidische Vorrichtung, die eine oder mehrere Mikrokanalstrukturen aufweist. Unter anderem wird eine Reaktionskammer mit einer Kugelschüttung für Experimente beschrieben. Dabei hält die Reaktionskammer die Kügelchen auf eine solche Art und Weise zurück, dass eine homogene Säule aus Kügelchen entsteht. Die Kugelschüttung füllt den gesamten radial äußeren Teil der Reaktionskammer auf. Die Reaktionskammer stellt gleichzeitig eine physikalische Barriere dar, die verhindern soll, dass Flüssigkeit außen um die Kugelschüttung herum strömt. Damit stellt die Reaktionskammer eine Dichtvorrichtung dar. Die durchgeführten Experimente sind beispielsweise durch die Interaktion der Kügelchen als Festphase mit einem in einer Flüssigkeit gelösten Stoff als Oberflächenanbindungsreaktion charakterisiert. Mit der beschriebenen Vorrichtung können mehrere Experimente parallel durchgeführt werden.

Aus der US 2014/220673 A1 ist eine Filtervorrichtung zur Isolation und Anreicherung von zirkulierenden Tumorzellen bekannt, bei der ein Filtermedium, dessen eines Ende an einer Wand eines Fluidkanals angeordnet ist, ein Array von eindimensionalen Kanälen aufweist, die angeordnet sind, um zu einem Zentrum eines Hauptflusses durch den hin konvergieren. Ein Flüssigkeitsfluss durch den Fluidkanal kann mittels Zentrifugalkraft bewirkt werden.

## ÜBERBLICK

Es besteht weiterhin ein Bedarf nach Vorrichtungen und Verfahren, die bei geringem Aufwand ein kontrolliertes Durchfließen eines porösen Mediums von radial innen nach radial außen ermöglichen.

Diese Aufgabe wird durch eine Vorrichtung nach Anspruch 1 und ein Verfahren nach Anspruch 13 gelöst.

Beispiele der vorliegenden Offenbarung schaffen eine Vorrichtung zum Leiten einer Flüssigkeit durch ein poröses Medium mit folgenden Merkmalen:

einem um ein Rotationszentrum drehbaren Fluidikmodul, das eine Fluidkammer und eine Zufluss-Struktur aufweist,

einem porösen Medium, das in der Fluidkammer angeordnet ist, um einen durch Zentrifugalkraft bewirkten Fluss der Flüssigkeit, die auf einen radial inneren Abschnitt des porösen Materials trifft, zu einem radial äußeren Abschnitt des porösen Mediums zu ermöglichen, wobei das poröse Medium bezüglich des Flusses seitlich zumindest teilweise von Kammerwänden der Fluidkammer beabstandet ist, so dass eine fluidische Verbindung zwischen dem radial inneren Abschnitt des porösen Mediums und dem radial äußeren Abschnitt des porösen Mediums außerhalb des porösen Mediums existiert, die zwischen den Kammerwänden und dem porösen Medium einen möglichen Bypass-Pfad für einen Flüssigkeitsstrom nicht durch das poröse Medium darstellt,

wobei die Zufluss-Struktur ausgebildet ist, um einen durch Zentrifugalkraft bewirkten Zufluss der Flüssigkeit zu dem radial inneren Abschnitt des porösen Mediums auf eine erste Flussrate zu begrenzen, und

wobei ein Verhältnis der ersten Flussrate zu einer maximal möglichen Flussrate durch das poröse Medium nicht größer als zwei ist.

Beispiele der vorliegenden Offenbarung schaffen ein Verfahren zum Leiten einer Flüssigkeit durch ein poröses Medium mit folgenden Merkmalen:
Bereitstellen eines um ein Rotationszentrum drehbaren Fluidikmoduls, das eine Fluidkammer und eine Zufluss-Struktur aufweist, wobei ein poröses Medium, das in der Fluidkammer angeordnet ist, um einen durch Zentrifugalkraft bewirkten Fluss der Flüssigkeit, die auf einen radial inneren Abschnitt des porösen Materials trifft, zu einem radial äußeren Abschnitt des porösen Mediums zu ermöglichen, wobei das poröse Medium bezüglich des Flusses seitlich zumindest teilweise von Kammerwänden der Fluidkammer beabstandet ist, so dass eine fluidische Verbindung zwischen dem radial inneren Abschnitt des porösen Mediums und dem radial äußeren Abschnitt des porösen Mediums außerhalb des porösen Mediums existiert, die zwischen den Kammerwänden und dem porösen Medium einen möglichen Bypass-Pfad für einen Flüssigkeitsstrom nicht durch das poröse Medium darstellt, wobei die Zufluss-Struktur ausgebildet ist, um einen durch Zentrifugalkraft bewirkten Zufluss der Flüssigkeit zu dem radial inneren Abschnitt des porösen Mediums auf eine erste Flussrate zu begrenzen, und wobei ein Verhältnis der ersten Flussrate zu einer maximal möglichen Flussrate durch das poröse Medium nicht größer als zwei ist; und

Drehen des Fluidikmoduls um das Rotationszentrum, um den Zufluss der Flüssigkeit durch die Zufluss-Struktur zu dem radial inneren Abschnitt des porösen Mediums zu bewirken und die Flüssigkeit durch das poröse Medium zu leiten.

Beispiele der vorliegenden Offenbarung basieren auf der Erkenntnis, dass es durch geschicktes Ausnutzen der Vorteile eines zentrifugalen mikrofluidischen Systems möglich ist, einen Flüssigkeitsstrom durch ein poröses Medium kontrolliert zu leiten, so dass zumindest die Hälfte des Flüssigkeitsstroms durch das poröse Medium geleitet wird. Bei Beispielen kann der Flüssigkeitsstrom kontrolliert durch ein poröses Medium geleitet werden, ohne dass es zu einem Umfließen des porösen Mediums kommt. Dabei ist einer Fluidkammer, in der das poröse Medium ohne vollständige, bezüglich des Flusses seitliche Abdichtung angeordnet ist, eine Zufluss-Struktur vorgeschaltet, die den Zufluss derart begrenzt, dass der Zufluss maximal dem Doppelten der maximal möglichen Flussrate durch das poröse Medium entspricht. Dadurch wird erreicht, dass von dem auf den radial inneren Abschnitt des porösen Mediums treffenden Flüssigkeitsstrom zumindest die Hälfte durch das poröse Medium geleitet wird. Fluidikstrukturen, die die Zufluss-Struktur, die Fluidkammer und das poröse Medium aufweisen, können ferner ausgelegt werden, damit das Verhältnis der ersten Flussrate zu der maximal möglichen Flussrate durch das poröse Medium kleinere Werte annimmt, beispielsweise einen Wert von 1 oder darunter, wobei dann der gesamte Flüssigkeitsstrom durch das poröse Medium fließen kann.

Beispiele der vorliegenden Offenbarung basieren auf der Erkenntnis, dass die Integration eines porösen Mediums in eine zentrifugale mikrofluidische Plattform leicht mit anderen Operationen auf derselben zentrifugalen mikrofluidischen Plattform kombiniert werden kann. Bei Beispielen kann eine Blutplasmaseparation mit anschließender Aliquotierung und anschließender Verdünnung und anschließendem Mischen mit Komponenten zur Durchführung eines anschließendem Lateralfluss-Immunoassays mit minimalem Handhabungsaufwand und exaktem Probenvolumen realisiert werden. Das poröse Medium wird aufgrund seines großen Oberflächen-zu-Volumen-Verhältnisses als Substrat für die Oberflächenanbindungsreaktion genutzt.

## KURZE BESCHREIBUNG DER ZEICHNUNGEN

Beispiele der vorliegenden Offenbarung werden nachfolgend Bezug nehmend auf die beiliegenden Zeichnungen näher erläutert. Es zeigen:

| | |
|---|---|
| Fig. 1 | eine schematische Darstellung eines Beispiels einer Vorrichtung zum Leiten einer Flüssigkeit durch ein poröses Medium; |
| Fig. 2 | eine schematische Darstellung eines weiteren Beispiels einer Vorrichtung zum Leiten einer Flüssigkeit durch ein poröses Medium; |
| Fig. 3 | eine schematische Draufsicht eines Beispiels von Fluidikstrukturen mit einem mäanderförmigen Flusswiderstandskanal; |
| Fig. 4 | eine schematische Draufsicht eines Beispiels von Fluidikstrukturen mit einem geraden Flusswiderstandskanal; |
| Fig. 5 | ein Diagramm, das eine Bypassmenge einer an dem porösen Medium vorbeifließenden Flüssigkeit abhängig von einem Designfaktor D zeigt; |

| | |
|---|---|
| Fig. 6 | eine schematische Draufsicht auf ein Beispiel von Fluidikstrukturen, die mehrere Fluidkammern mit zugeordneten Zufluss-Strukturen aufweisen; |
| Fig. 7 | eine schematische Draufsicht auf ein Beispiel von Fluidikstrukturen, die mehrere in eine Fluidkammer in Strömungsrichtung hintereinander angeordnete poröse Medien aufweisen; |
| Fig. 8 | eine schematische Draufsicht auf ein Beispiel von Fluidikstrukturen mit einer Zufluss-Struktur, die einen Heber aufweist; |
| Fig. 9 | eine schematische Draufsicht auf ein Beispiel von Fluidikstrukturen, die eine radial innere Aliquotierstruktur aufweisen; |
| Fig. 10 | eine schematische Draufsicht auf ein Beispiel von Fluidikstrukturen, die eine radial äußere Aliquotierstruktur aufweisen; |
| Fig. 11 | eine schematische Querschnittansicht eines Beispiels von Fluidikstrukturen mit einem an einer Decke einer Fluidkammer angeordneten porösen Medium; |
| Fig. 12A | eine schematische Querschnittansicht eines Beispiels von Fluidikstrukturen mit einem an einem Boden einer Fluidkammer angeordneten porösen Medium; |
| Fig. 12B | eine schematische perspektivische Ansicht der Fluidikstrukturen von Fig. 12A; und |
| Fig. 13A bis 13D | schematische Draufsichten von Beispielen von porösen Medien. |

## DETAILLIERTE BESCHREIBUNG

Im Folgenden werden Beispiele der vorliegenden Offenbarung detailliert und unter Verwendung der beigefügten Zeichnungen beschrieben. Es sei darauf hingewiesen, dass gleiche Elemente oder Elemente, die die gleiche Funktionalität aufweisen, mit gleichen oder ähnlichen Bezugszeichen versehen sind, wobei eine wiederholte Beschreibung von Elementen, die mit dem gleichen oder ähnlichen Bezugszeichen versehen sind, typischerweise weggelassen wird. Insbesondere können gleiche oder ähnliche Elemente jeweils mit Bezugszeichen versehen sein, die eine gleiche Zahl mit einem unterschiedlichen oder keinem Kleinbuchstaben aufweisen. Beschreibungen von Elementen, die gleiche oder ähnliche Bezugszeichen aufweisen, sind gegeneinander austauschbar. In der folgenden Beschreibung werden viele Details beschrieben, um eine gründlichere Erklärung von Beispielen der Offenbarung zu liefern. Es ist jedoch für Fachleute offensichtlich, dass andere Beispiele ohne diese spezifischen Details implementiert werden können. Merkmale der unterschiedlichen beschriebenen Beispiele können miteinander kombiniert werden, es sei denn Merkmale einer entsprechenden Kombination schließen sich gegenseitig aus oder eine solche Kombination ist ausdrücklich ausgeschlossen.

Bevor Beispiele der vorliegenden Offenbarung näher erläutert werden, werden Definitionen einiger hierin verwendeter Begriffe angegeben.

**Fluidikmodul:** Körper, in dem Fluidikstrukturen gebildet sind, wobei der Körper als Rotationskörper oder als Einsatz für einen Rotationskörper ausgebildet sein kann. Beispiele eines Fluidikmoduls sind zentrifugale Kartuschen in Form von zentrifugal mikrofluidischen Scheiben oder mikrofluidische Zentrifugenröhrchen.

**Fluidikstrukturen:** in einem Fluidikmodul gebildete Ausnehmungen, Hohlräume und Kanäle, die zur Handhabung von Flüssigkeiten ausgelegt sind. Zentrifugale Mikrofluidikstrukturen sind zur Handhabung von Flüssigkeiten im Femtoliter- bis Milliliter-Bereich in rotierenden Systemen ausgelegt.

**Hydrostatische Höhe:** radiale Distanz zwischen zwei Punkten in einem zentrifugalen Fluidikmodul (zwischen denen sich Flüssigkeit einer zusammenhängenden Flüssigkeitsmenge befindet).

**Hydrostatischer Druck:** durch Zentrifugalkraft induzierte Druckdifferenz zwischen zwei Punkten aufgrund der zwischen ihnen liegenden hydrostatischen Höhe, der Dichte des Mediums und der Rotationsfrequenz.

**Kapillarität:** Verhalten von Flüssigkeiten bei Kontakt mit Kapillaren, z. B. engen Röhren oder in einem porösen Medium. Diese Effekte werden durch die Oberflächenspannung von Flüssigkeiten selbst und die Grenzflächenspannung zwischen Flüssigkeiten und der festen Oberfläche hervorgerufen.

**Viskose Dissipation:** beim Fließen einer Flüssigkeit verlorene Energie in Form von thermischer Energie durch interne Scherkräfte.

**Permeabilität:** quantitative Größe für die Durchlässigkeit eines porösen Mediums für Gase oder Flüssigkeiten.

**Immunoassay:** eine Methode der Bioanalytik, die die spezifische Antikörper-Antigen-Reaktion nutzt, um einen Analyten in einer flüssigen Phase nachzuweisen.

**Inkubationszeit:** Zeit, in der eine spezifische Reaktion ablaufen kann, um beispielsweise den Antigen-Antikörper-Komplex zu bilden.

**Festphase:** Oberfläche eines Feststoffes, die beispielsweise für eine separierende Adsorptionsreaktionen genutzt wird. Die Oberfläche kann mit Substanzen funktionalisiert sein.

**Antikörper:** ein Protein, das körperfremde Stoffe (Antigen) erkennt und spezifisch anbindet.

**Antigen:** körperfremde Stoffe, die von Antikörpern erkannt und an die Antikörper spezifisch anbinden können.

**Analyt:** eine Komponente, die sich in der Analysenprobe befindet und die nachgewiesen werden soll.

**Bypass:** Flüssigkeitsstrom, der nicht dem gewünschten fluidischen Pfad folgt, beispielsweise Fluss über oder neben einem poröses Medium, anstelle durch das poröse Medium hindurch.

**Dynamischer Bereich:** das Verhältnis zwischen dem maximalen noch zu differenzierenden Signal und dem minimalen noch zu differenzierenden Signal (Detektionsgrenze).

**Immunchromatographischer Schnelltest (Lateral Flow Test):** ein physikalischchemisches Trennverfahren, welches Dünnschichtchromatographie und biochemische Affinitätsreaktionen kombiniert. Ein Schnelltest zum Nachweis von Analyten in Form eines Teststreifens, der in der Regel aus Membranen besteht, die aufgrund ihrer Kapillarität die Analysenprobe durch den Teststreifen ziehen.

**Radial:** wird hierin der Ausdruck radial verwendet, so ist jeweils radial bezüglich eines Rotationszentrums R, um das ein Fluidikmodul drehbar ist, gemeint. Im Zentrifugalfeld ist somit eine radiale Richtung von dem Rotationszentrum weg radial auswärts und eine radiale Richtung zu dem Rotationszentrum hin ist radial einwärts. Ein Fluidkanal, dessen Anfang näher am Rotationszentrum liegt als dessen Ende, ist radial abfallend, während ein Fluidkanal, dessen Anfang weiter vom Rotationszentrum entfernt ist als dessen Ende, radial ansteigend ist. Ein Kanal, der einen radial ansteigenden Abschnitt aufweist, weist also Richtungskomponenten auf, die radial ansteigen bzw. radial nach innen verlaufen. Es ist klar, dass ein solcher Kanal nicht exakt entlang einer radialen Linie verlaufen muss, sondern in einem Winkel zu der radialen Linie oder gebogen verlaufen kann.

**Heber:** unter einem Heber wird hierin ein Fluidkanal verstanden, der ein lokales radiales Minimum zwischen einem radial ansteigenden und einem radial abfallenden Kanalabschnitt aufweist.

Beispiele der vorliegenden Offenbarung beziehen sich auf eine Struktur sowie ein Verfahren zum Prozessieren einer oder mehrerer Flüssigkeiten durch ein poröses Medium unter Zentrifugation. Die Flussrichtung ist nach radial auswärts.

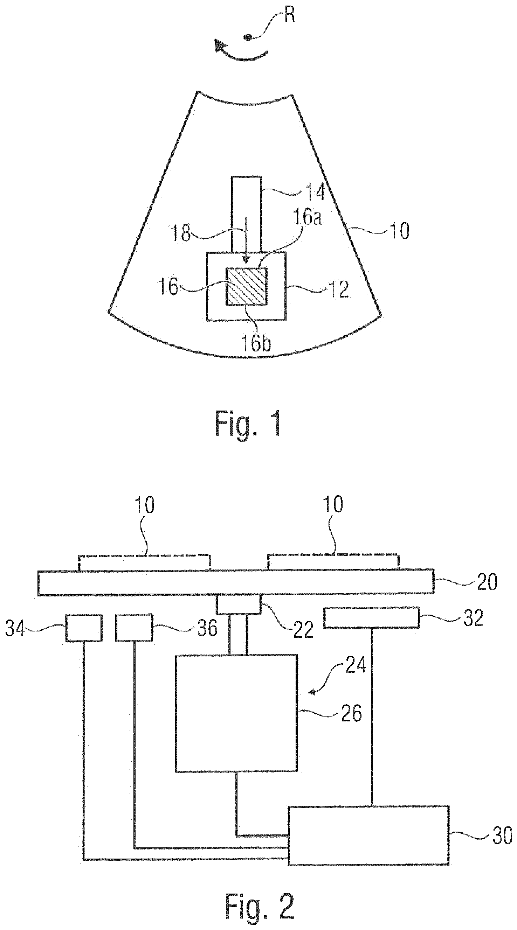

Fig. 1 zeigt schematisch ein Beispiel einer Vorrichtung zum Leiten einer Flüssigkeit durch ein poröses Medium, die ein um ein Rotationszentrum bzw. eine Rotationsachse R drehbares Fluidikmodul 10 aufweist. Das Fluidikmodul 10 weist eine Fluidkammer 12 und eine Zufluss-Struktur 14 auf. Ein poröses Medium 16 ist in der Fluidkammer 12 angeordnet. Das Fluidikmodul ist um das Rotationszentrum R drehbar, so dass durch Zentrifugalkraft ein Flüssigkeitsfluss 18 durch die Zufluss-Struktur 14 bewirkt wird, der auf einen radial inneren Abschnitt 16a des porösen Mediums trifft, wie in Fig. 1 durch den Pfeil 18 angedeutet ist. Der Flüssigkeitsfluss 18 wird durch die Zufluss-Struktur auf eine erste Flussrate begrenzt. Das poröse Medium 16 ist derart in der Fluidkammer 12 angeordnet, dass die Flüssigkeit das poröse Medium 16 durch Zentrifugalkraft von dem radial inneren Abschnitt 16a zu einem radial äußeren Abschnitt 16b durchfließt. Seitliche Ränder des porösen Mediums 16 sind von Kammerwänden der Fluidkammer beabstandet, so dass eine fluidische Verbindung (Bypass) zwischen einem Bereich der Fluidkammer 12 radial innerhalb des porösen Mediums 16 und einem Bereich der Fluidkammer 12 radial außerhalb des porösen Mediums 16 existiert. Gemäß der vorliegenden Offenbarung begrenzt die Zufluss-Struktur die erste Flussrate, die derart bezüglich der maximal möglichen Flussrate durch das poröse Medium eingestellt ist, dass mindesten 50 % der Flüssigkeit von dem Abschnitt 16a zu dem Abschnitt 16b durch das poröse Medium fließen.

Bei Beispielen weist die Zufluss-Struktur zumindest einen Flusswiderstandskanal und/oder zumindest eine Düse, und/oder zumindest ein poröses Medium und/oder zumindest eine Bead-Schüttung auf. Bei Beispielen mündet die Zufluss-Struktur in einem radialen Abstand $r_i$ von einem Rotationszentrum in eine Zufluss-Kammer und in einem radialen Abstand $r_2$ von dem Rotationszentrum in die Fluidkammer, mit $r_i < r_2$. Die Zufluss-Struktur ist somit radial abfallend, so dass bei Rotation durch Zentrifugalkraft ein Flüssigkeitsfluss durch die Zufluss-Struktur bewirkt werden kann.

Die Zufluss-Struktur bietet dem Flüssigkeitsfluss einen Flusswiderstand, durch den der Flüssigkeitsfluss auf die erste Flussrate begrenzt wird. Die Zufluss-Struktur stellt somit ein Flusswiderstandselement dar, dessen Fluideinlass in eine Zufluss-Kammer (Kavität) münden kann und dessen Fluidauslass in die Fluidkammer mündet bzw. mit Fluidkammer fluidisch gekoppelt ist. Die Zufluss-Kammer kann fließend in das Flusswiderstandselement übergehen oder sogar Teil des Widerstandselements sein. Bei Beispielen kann das Flusswiderstandselement durch ein poröses Medium oder eine Bead-Schüttung in der Zufluss-Kammer gebildet sein. Bei Beispielen kann das Flusswiderstandselement durch eine Düse am Ausgange der Zufluss-Kammer gebildet sein. Bei Beispielen kann das Flusswiderstandselement durch einen Kanal gebildet sein, dessen Einlass in die Zufluss-Kammer mündet und dessen Auslass in die Fluidkammer mündet.

Bei Beispielen kann der Druckverlust pro Volumenstrom für die Definition eines Widerstandselementes angegeben werden. Ein Element kann dann als Widerstandselement für die Fluidikstruktur zählen, wenn gilt:

$$R = \frac{\Delta p}{Q} > 3.5 * 10^8 \frac{Pa * s}{m^3}$$

mit

R: fluidischer Widerstand des Elements,
$\Delta p$: Druckverlust über dem Element,
Q: Flussrate durch das Element.

Wenn das Widerstandselement durch einen Flusswiderstandskanal gebildet ist, kann jeder Abschnitt einer Fluidstruktur als Teil eines Flusswiderstandskanals betrachtet werden, für dessen Flussquerschnitt $A_{Ch}$ gilt:

$$\frac{1}{{A_{Ch}}^2} > 100 \frac{1}{mm^4}$$

Anders ausgedrückt kann jeder Teil einer Fluidstruktur, der einen Flussquerschnitt von weniger als 0,1 $mm^2$ bietet, als ein Bestandteil eines Flusswiderstandskanals betrachtet werden.
Wie im Folgenden ausführlich erläutert wird, sind gemäß der vorliegenden Offenbarung die Fluidikstrukturen derart ausgebildet, dass die folgende Gleichung erfüllt ist:

$$D = \frac{Q_{Ch}}{Q_{max,m}} \leq 2$$

wobei $Q_{Ch}$ die Flussrate durch die Zufluss-Struktur, $Q_{max,m}$ der maximal mögliche Fluss durch das poröse Medium und D ein Designfaktor ist.
$Q_{max,m}$ kann über das Darcy-Gesetz berechnet werden und gibt den maximal möglichen Fluss durch das poröse Medium, bei einem angelegten Zentrifugaldruck, ohne Bypass wieder. $Q_{Ch}$ wird je nach eingesetzten Widerstandselement berechnet oder experimentell eingestellt. Ist das Widerstandselement ein Kanal oder eine Düse kann der Druckverlust analog zum Hagen-Poiseuille-Gesetz berechnet werden. Hinsichtlich der Berechnung des Druckverlustes kann beispielsweise auf M. Bahrami u.a., "Pressure Drop of Fully-Developed, Laminar Flow in Microchannels of Arbitray Cross-Section", Transactions oft he ASME, Vol. 128, September 2006, Seiten 1036 bis 1044; I. Schwarz u.a., "System-level network simulation for robust centrifugal-microfluidic lab-on-a-chip systems", Lab Chip, 2016, 16, Seiten 1873 bis 1885; M. Richter u.a., "Microchannels for applications in liquid dosing and flow-rate measurement", Sensors and Actuators A: Physical, 1997, Vol. 62, Ausgabe 1-3, Seiten 480-483 und H. Bruus, "Theoretical Microfluidics" 2008, Oxford University Press, Oxford, Vol. 18, Kapitel 4, "Hydraulic resistance and compliance", Seiten 71-90, verwiesen werden. Aus dem Druckverlust kann dann wiederum die Flussrate berechnet werden. Ist das Widerstandselement ein poröses Medium oder eine Bead-Schüttung kann das Darcy Gesetz angewendet werden.
Da beide Gesetze sich von den Navier-Stokes-Gleichungen ableiten und sich nur durch Parameter unterscheiden, die die jeweilige Geometrie des durchflossenen Elements berücksichtigen, kürzt sich bei der Berechnung des Verhältnisses der Flussraten die Viskosität der Flüssigkeit heraus. Beide Flüsse $Q_{Ch}$ und $Q_{max,m}$ sind zentrifugal getrieben. Daher kürzt sich die Winkelgeschwindigkeit und Dichte ebenfalls bei der Berechnung des Verhältnisses der Flussraten heraus. Somit können die Fluidikstrukturen unabhängig von den Fluideigenschaften und der Rotationsfrequenz ausgelegt werden.
Falls erforderlich, kann die Flussrate durch die Zufluss-Struktur unter Verwendung der geometrischen Parameter der Zufluss-Struktur, der Rotationsgeschwindigkeit und der Fluideigenschaften der Flüssigkeit berechnet werden. Alternativ kann die Flussrate auch gemessen werden, indem das Flüssigkeitsvolumen erfasst wird, das in einer bestimmten Zeit durch die Zufluss-Struktur gelangt. Die maximal mögliche Flussrate durch das poröse Medium kann, bei Bedarf, ebenfalls unter Verwendung der Parameter des porösen Mediums und der Flüssigkeit berechnet werden oder kann experimentell ermittelt werden.
Fig. 2 zeigt schematisch eine Seitenansicht eines Beispiels einer Vorrichtung zum Leiten einer Flüssigkeit durch ein poröses Medium, die ein zentrifugal-mikrofluidisches System Fig. 2 zeigt schematisch eine Seitenansicht eines Beispiels einer Vorrichtung zum Leiten einer Flüssigkeit durch ein poröses Medium, die ein zentrifugal-mikrofluidisches System darstellt. Die Vorrichtung weist ein Fluidikmodul 20 auf, das als ein Rotationskörper ausgebildet ist. Alternativ weist die Vorrichtung ein oder mehrere Fluidmodule 10 auf, die in einen Rotationskörper 20 eingesetzt sind, wie in gestrichelten Linien in Fig. 2 angedeutet ist. In dem Fluidikmodul 10 oder 20 können Fluidikstrukturen wie sie hierin beschrieben sind, gebildet sein. Das Fluidikmodul kann beispielsweise ein Substrat und einen Deckel aufweisen. Der Rotationskörper 20 kann kreisförmig sein, mit einer mittigen Öffnung, über die der Rotationskörper 20 über eine übliche Befestigungseinrichtung an einem drehbaren Teil 22 einer Antriebsvorrichtung 24 angebracht sein kann. Das drehbare Teil 22 ist drehbar an einem stationären Teil 26 der Antriebsvorrichtung 24 gelagert. Bei der Antriebsvorrichtung 24 kann es beispielsweise um eine herkömmliche Zentrifuge, die eine einstellbare Drehgeschwindigkeit aufweisen kann, oder auch ein CD- oder DVD-Laufwerk handeln. Eine Steuereinrichtung 30 kann vorgesehen sein, die ausgelegt ist, um die Antriebsvorrichtung 24 zu steuern, um den Rotationskörper 20 mit einer Rotation oder mit Rotationen unterschiedlichen Drehfrequenzen zu beaufschlagen. Die Steuereinrichtung 30 kann, wie für Fachleute offensichtlich ist, beispielsweise durch eine entsprechend programmierte Recheneinrichtung oder eine anwenderspezifische integrierte Schaltung implementiert sein. Die Steuereinrichtung 30 kann ferner ausgelegt sein, um auf manuelle Eingaben durch einen Benutzer hin die Antriebsvorrichtung 24 zu steuern, um die erforderlichen Rotationen des Rotationskörpers zu bewirken. In jedem Fall kann die Steuereinrichtung 30 konfiguriert sein, um die Antriebsvorrichtung 24 zu steuern, um den Rotationskörper mit der erforderlichen Rotation zu beaufschlagen, um Beispiele der vorliegenden Offenbarung zu implementieren. Als Antriebsvorrichtung 24 kann eine herkömmliche Zentrifuge mit nur einer Drehrichtung verwendet werden.

Das Fluidikmodul 10 oder 20 weist die hierin beschriebenen Fluidikstrukturen auf, die durch Kavitäten und Kanäle in dem Deckel, dem Substrat oder in dem Substrat und dem Deckel gebildet sein können. Bei Beispielen können beispielsweise Fluidikstrukturen in dem Substrat abgebildet sein, während Einfüllöffnungen und Entlüftungsöffnungen in dem Deckel gebildet sind. Bei Beispielen ist das strukturierte Substrat (inklusive Einfüllöffnungen und Entlüftungsöffnungen) oben angeordnet und der Deckel unten angeordnet.

Bei Beispielen der vorliegenden Offenbarung kann das Fluidikmodul aus einem beliebigen geeigneten Material gebildet sein, beispielsweise einem Kunststoff, wie PMMA (Polymethylmethacrylat), PC (Polycarbonat), PVC (Polyvinylchlorid) oder PDMS (Polydimethylsiloxan), Glas oder dergleichen. Der Rotationskörper 20 kann als eine zentrifugal-mikrofluidische Plattform betrachtet werden. Bei bevorzugten Beispielen können das Fluidikmodul bzw. der Rotationskörper aus einem Thermoplast, wie z.B. PP (Polypropylen), PC, COP (Cyclic Olefin Polymer), COC (Cyclo Olefin Copolymer) oder PS (Polystyrol) gebildet sein.

Bei Beispielen kann die Vorrichtung ferner eine Temperierungseinrichtung 32 aufweisen, die ausgelegt ist, um die Temperatur des Fluidikmoduls zu steuern. Die Temperierungseinrichtung 32 kann, wie in Fig. 2 gezeigt ist, als eine externe Heizeinrichtung implementiert sein. Alternativ kann die Heizeinrichtung in das Fluidikmodul oder den Rotationskörper, der das Fluidikmodul trägt, integriert sein. Bei Beispielen kann die Vorrichtung ferner eine Erfassungseinrichtung 34 aufweisen, die ausgelegt ist, um ein Ergebnis einer Reaktion der Flüssigkeit mit dem porösen Medium zu erfassen. Beispielsweise kann die Erfassungseinrichtung 34 ausgelegt sein, um das Ergebnis der Reaktion optisch zu erfassen. Beispielsweise kann die Erfassungseinrichtung durch eine Kamera implementiert sein. Bei Beispielen kann die Vorrichtung ferner eine Einrichtung 36 zum Erfassen einer Information über die Viskosität der Flüssigkeit aufweisen. Bei Beispielen kann die Einrichtung 36 ausgelegt sein, um eine Flussrate durch die Zufluss-Struktur zu messen, die wiederum bei einer gegebenen Rotationsgeschwindigkeit ein Maß für die Viskosität ist. Beispielsweise kann die Einrichtung 36 ausgelegt sein, um die in einer bestimmten Zeit durch die Zufluss-Struktur geflossene Flüssigkeitsmenge zu bestimmen. Bei Beispielen kann die Einrichtung 36 durch eine Kamera gebildet sein. Bei Beispielen kann die Vorrichtung ausgelegt sein, um die Drehgeschwindigkeit der Drehung abhängig von der erfassten Information über die Viskosität einzustellen, um die Flussrate durch den Zufluss-Kanal auf eine vorbestimmte Flussrate einzustellen. Wie in Fig. 2 gezeigt ist, können die Temperierungseinrichtung 22 und die Einrichtungen 34 und 36 kommunikativ drahtgebunden oder drahtlos mit der Steuereinrichtung gekoppelt sein. Die Steuereinrichtung 30 kann ausgebildet sein, um die Erfassungsergebnisse der Einrichtungen 34 und 36 zu erhalten, basierend auf den Ergebnissen der Einrichtung 34 Informationen über das Reaktionsergebnis auszugeben oder anzuzeigen, und basierend auf den Ergebnissen der Einrichtung 36 die Antriebseinrichtung 24 zu steuern. Ferner kann die Steuereinrichtung die Temperierungseinrichtung 32 zu steuern, um die Temperatur des Fluidikmoduls auf eine vorbestimmte Temperatur zu steuern oder zu regeln. Zu diesem Zweck kann ferner ein Temperatursensor zum Erfassen der Temperatur des Fluidikmoduls mit der Steuereinrichtung 30 gekoppelt sein.

Im Folgenden werden Beispiele der vorliegenden Offenbarung insbesondere anhand eines Flusswiderstandskanals als Zufluss-Struktur beschrieben. Die folgenden Lehren sind in gleicher Weise auf andere Widerstandselemente übertragbar.

Bei Beispielen wird Flüssigkeit zentrifugal aus einer ersten Kammer durch einen Flusswiderstandskanal auf ein poröses Medium in einer zweiten Kammer getrieben. Die Flüssigkeit benetzt das poröse Medium, zum Beispiel eine Membran. Die Membran wird mit Flüssigkeit aufgefüllt und es entsteht ein Zentrifugaldruck in der Flüssigkeit in der Membran. Unter einem kritischen Füllstand hält die Kapillarkraft die Flüssigkeit in der Membran. Über einem kritischen Füllstand, gegebenenfalls auch komplett gefüllt, tritt Flüssigkeit radial außen aus der Membran aus. Dabei wird die Flussrate durch den Flusswiderstandskanal derart eingestellt, dass es zu nur bis zu einem bestimmten Grad oder zu keinem Umfließen der Flüssigkeit über oder neben dem porösen Medium kommt.

Damit kann, vorausgesetzt die Flüssigkeit benetzt das poröse Medium, ein von der Kapillarkraft unabhängiger und gut kontrollierbarer Durchfluss durch ein poröses Medium realisiert werden. Bislang war die Verhinderung des Überfließens des porösen Mediums bei von radial innen nach radial außen getriebenen Flüssigkeiten nur über Strukturen möglich, die ein Umfließen des porösen Mediums durch eine physikalische Barriere verhindern und somit eine Dichtvorrichtung darstellen. Durch die vorliegende Offenbarung entfällt die Notwendigkeit einer Dichtvorrichtung. Es lässt sich die Flussrate und somit auch die Verweilzeit der Analysenproben im porösen Medium über einen weiten Arbeitsbereich präzise einstellen.

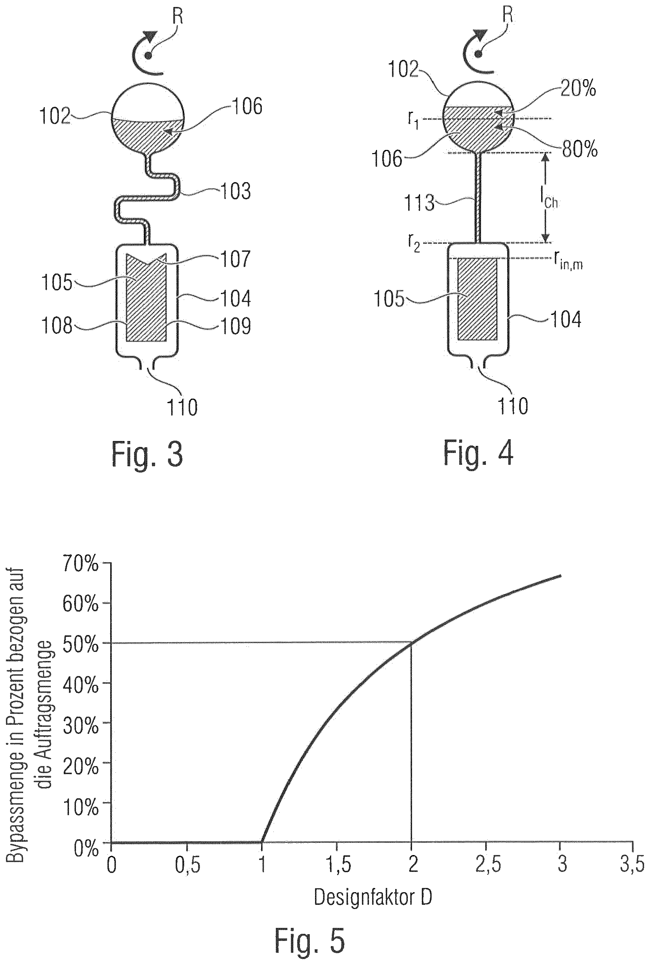

Fig. 3 zeigt schematisch eine Draufsicht auf Fluidikstrukturen eines um ein Rotationszentrum drehbaren Fluidikmoduls. Die Fluidikstrukturen weisen eine erste Fluidkammer 102, einen Flusswiderstandskanal 103 und eine zweite Fluidkammer 104 auf. Bei dem in Fig. 3 gezeigten Beispiel ist der Flusswiderstandskanal 103 mäanderförmig. Ein radial inneres Ende des Flusswiderstandskanals 103 mündet in die erste Fluidkammer 102, die eine Zufluss-Kammer darstellt, und ein radial äußeres Ende des Flusswiderstandskanals 103 mündet in die zweite Fluidkammer 104. In der zweiten Fluidkammer 104 ist ein poröses Medium 105 angeordnet, dass an einer Seite an einer Kammerwand der zweiten Fluidkammer 104 fixiert sein kann. An allen anderen Seiten kann das poröse Medium von den Kammerwänden beabstandet sein. Beide Fluidkammern 102 und 104 können entlüftet sein.

Der Flusswiderstandskanal 103 ist radial abfallend, so dass bei Rotation um das Rotationszentrum Flüssigkeit 106, die sich in der ersten Fluidkammer 102 befindet, durch Zentrifugalkraft durch den Flusswiderstandskanal getrieben werden kann. Die Flüssigkeit aus der ersten Fluidkammer wird dabei zentrifugal auf einen radial inneren Abschnitt des porösen Mediums 105 getrieben. Die das poröse Medium benetzende Flüssigkeit füllt das poröse Medium auf und es entsteht ein Zentrifugaldruck in der Flüssigkeit im porösen Medium. Über einem kritischen Füllstand, gegebenenfalls auch komplett gefüllt, würde Flüssigkeit radial außen aus dem porösen Medium austreten. Bei Beispielen der vorliegenden Offenbarung kann dabei der fluidische Widerstand des Flusswiderstandskanals 103 derart ausgestaltet sein, dass unter Rotation die resultierende Flussrate von der ersten Fluidkammer 102 in die zweite Fluidkammer 104 zu der folgenden Bedingung führt: Wenn der gesamte, vom Flusswiderstandskanals her kommende Flüssigkeitsstrom durch das poröse Medium in Richtung radial auswärts fließen würde, resultiert ein viskoser Druckverlust $p_{Darcy}$, der maximal dem zweifachen des hydrostatischen Drucks $p_{hyd,mem}$ der Flüssigkeit im porösen Medium entspricht, wenn das poröse Medium über die gesamte radiale Länge mit Flüssigkeit gefüllt wäre.

Bei einem weiteren Beispiel der vorliegenden Offenbarung kann dabei der fluidische Widerstand des Flusswiderstandskanals 103 derart ausgestaltet sein, dass unter Rotation die resultierende Flussrate von der ersten Fluidkammer 102 in die zweite Fluidkammer 104 zu der folgenden Bedingung führt: Wenn der gesamte, vom Flusswiderstandskanals her kommende Flüssigkeitsstrom durch das poröse Medium in Richtung radial auswärts fließen würde, resultierte ein viskoser Druckverlust $p_{Darcy}$, der maximal dem zweifachen des hydrostatischen Drucks $p_{hyd,mem}$ der Flüssigkeit in jedem noch so kleinen radial ausgebildeten Element des porösen Medium entspricht, wenn das noch so kleine Element des porösen Medium über die gesamte radiale Länge des noch so kleinen Elements mit Flüssigkeit gefüllt wäre.

Wie in Fig. 3 gezeigt ist, kann das poröse Medium 105 mit einer Einkerbung 107 an der radial inneren Position versehen sein, um den von dem Flusswiderstandskanal 103 kommenden Flüssigkeitsfluss unter Rotation auf das poröse Medium zu leiten. Anders ausgedrückt unterstützt die Einkerbung die Aufnahme der Flüssigkeit durch das poröse Medium und hilft dabei, zu verhindern, dass die Flüssigkeit unmittelbar an dem porösen Medium entlangfließt. Die Einkerbungskante steigt zu den Schnittpunkten mit den beiden radial verlaufenden Rändern 108, 109 des porösen Mediums 105 hin in Richtung radial innen an.

Nachdem die Flüssigkeit das poröse Medium 105 durchflossen hat, kann es die zweite Fluidkammer 104 über einen Auslass 110 verlassen.

Fig. 4 zeigt ein weiteres Beispiel von Fluidikstrukturen eines um ein Rotationszentrum R drehbaren Fluidikmoduls. Gemäß Fig. 4 verbindet ein gerader, radial abfallender Flusswiderstandskanal 113 eine erste Fluidkammer 102 und einer zweiten Fluidkammer 104. In der zweiten Fluidkammer 104 ist wiederum ein poröses Medium 105 vorgesehen, dessen radial innerer Rand bei diesem Beispiel keine Einkerbung aufweist. In Fig. 4 sind ferner Größen eingezeichnet, auf die im Folgenden eingegangen wird. Bei diesen handelt es sich um die radiale Position $r_{in,m}$ des radial inneren Endes des porösen Mediums, um die radiale Position $r_2$ der Mündung des Flusswiderstandskanals 113 in die zweite Fluidkammer 104 und somit die radial außen liegende Position der Flüssigkeitssäule, die Länge $l_{Ch}$ des Flusswiderstandskanals 113 und eine radiale Position $r_1$, die einer radial innen liegenden Position der Flüssigkeitssäule der Flüssigkeit 106 bei 80% eines initialen Füllvolumens der ersten Fluidkammer 102 entspricht. Das initiale Füllvolumen kann dabei dem Volumen entsprechen, mit dem die Fluidkammer und der Flusswiderstandskanal anfänglich befüllt werden.

Bei Beispielen der vorliegenden Offenbarung erfolgt bei einer Drehung des Fluidikmoduls um das Rotationszentrum R ein Durchfluss der Flüssigkeit durch das in das Fluidikmodul integrierte poröse Medium, beispielsweise das poröse Medium 105 in Fig. 4. Der Flusswiderstandskanal 113 stellt die Flussrate von der ersten Fluidkammer 102 in die zweite Fluidkammer 104 ein.

Damit das poröse Medium 105 von der Flüssigkeit durchflossen wird und das poröse Medium 105 im zentrifugalen Schwerefeld von der Flüssigkeit nicht umflossen wird (Bypass), müssen die Fluidikstrukturen folgender Bedingung folgen:

$$\frac{r_2{}^2 - r_1{}^2}{C_R \frac{l_{Ch}}{A_{Ch}{}^2}} = 2 * \boldsymbol{D} * r_{in,m} * A_m * \kappa \qquad (1)$$

mit

$r_1$: radial innen liegende Position der Flüssigkeitssäule bei 80% des initialen Füllvolumens
$r_2$: radial außen liegende Position der Flüssigkeitssäule
$C_R$: Geometriefaktor zur Berechnung des fluidischen Widerstands im Flusswiderstandskanal
$l_{Ch}$: Länge des Flusswiderstandskanals
$A_{Ch}$: Querschnittfläche des Flusswiderstandskanals
D: Designfaktor
$r_{in,m}$: radiale Entfernung zwischen Rotationszentrum R und radial innerem Ende des porösen Mediums
$A_m$: Querschnittfläche des porösen Mediums
$\kappa$: Permeabilität des porösen Mediums

Der Geometriefaktor $C_R$ ist beispielsweise für einen quadratischen Querschnitt des Flusswiderstandskanals 28.4 und für runde Kanäle $8\pi$ was in etwa 25.1 entspricht. Für rechteckige Widerstandskanäle berechnet sich $C_R$ wie folgt:

$$C_R = \frac{2}{a \sum_{i=1}^{\infty} \frac{a}{\alpha_i{}^5} \left( \frac{\alpha_i}{a} - \tanh \frac{\alpha_i}{a} \right)} \qquad (2)$$

$$\text{mit } \alpha_i = \frac{\pi(2i-1)}{2} \text{ und } a = \frac{d}{w}$$

Dabei stellt d die Tiefe des Kanals und w die Breite des Kanals dar. Weitere Geometriefaktoren für spezielle Kanalquerschnitte können der Fachliteratur entnommen werden. Hier sei insbesondere auf M. Richter u.a., "Microchannels for applications in liquid dosing and flow-rate measurement", Sensors and Actuators A: Physical, 1997, Vol. 62, Ausgabe 1-3, Seiten 480-483 verwiesen.

Gleichung (1) leitet sich aus folgenden physikalischen Gleichungen ab:
Der Gleichung für den zentrifugalen Druck $p_{cent}$ im Flusswiderstandskanal:

$$p_{cent} = \frac{\rho}{2} \omega^2 (r_2{}^2 - r_1{}^2) \qquad (3)$$

mit

$\omega$: Rotationsgeschwindigkeit
$\rho$: Dichte des Fluids

Der Gleichung für den hydrostatischen Druck in der Flüssigkeit im porösen Medium:

$$p_{hyd,m} = \frac{\rho}{2} \omega^2 \left( (r_{in,m} + l_m)^2 - r_{in,m}{}^2 \right) \qquad (4)$$

wobei $l_m$ die Länge des porösen Mediums in Durchflussrichtung ist, d.h. die radiale Länge des porösen Mediums ist.

Der Gleichung für die viskose Dissipation im Flusswiderstandskanal:

$$p_{visc} = Q_{Ch} C_R \frac{\eta \, l_{Ch}}{A_{Ch}{}^2} \qquad (5)$$

mit

$Q_{Ch}$: Flussrate durch den Flusswiderstandskanal
$\eta$: Viskosität der Flüssigkeit

Der Darcy-Gleichung für die viskose Dissipation im porösen Medium:

$$p_{Darcy} = Q\frac{\eta\, l_m}{\kappa A_m} \quad (6)$$

wobei Q die Flussrate durch das poröse Medium ist.

Für die Berechnung wird ein gefülltes poröses Medium angenommen. Damit benötigt die Kapillarkraft keine Berücksichtigung. Die maximale bypassfreie Flussrate durch das poröse Medium $Q_{max,m}$ wird bestimmt, indem der hydrostatische Druck in der Flüssigkeit im porösen Medium mit der viskosen Dissipation aufgrund des Durchflusses durch das poröse Medium gleichgesetzt wird:

$$p_{hyd,m} = p_{Darcy} \quad (7)$$

Da der hydrostatische Druck in der Flüssigkeit im porösen Medium quadratisch, der Druckverlust durch viskose Dissipation linear über die radiale Länge des porösen Mediums zunimmt, werden beide Gleichungen nach der radialen Länge der Membran $l_m$ abgeleitet und im Punkt $l_m$=0 gleichgesetzt. Damit ist sichergestellt, dass der Zentrifugaldruck über die gesamte Länge des porösen Mediums größer gleich der viskosen Dissipation ist.

$$\frac{dp_{hyd,m}}{dl_m} = \frac{dp_{Darcy}}{dl_m}, \text{ mit}$$

$$\frac{dp_{hyd,m}}{dl_m} = \rho\left(l_m + r_{in,m}\right)\omega^2 \quad (8)$$

Löst man Gleichung (8) nach $Q_{max,m}$ auf, kann der maximal mögliche Durchfluss über die gesamte radiale Länge des porösen Mediums berechnet werden. Die entsprechende Gleichung für den maximal möglichen Durchfluss durch das poröse Medium lautet wie folgt:

$$Q_{max,m} = \frac{\varrho * r_{in,m} * \omega^2 * A_m * \kappa}{\eta} \quad (9)$$

Die Flussrate, die durch den Flusswiderstandskanal erzielt wird, berechnet sich wie folgt:

$$p_{cent} = p_{visc} \quad (10)$$

Durch Einsetzten von Gleichung (3) und Gleichung (5) in Gleichung (10) und Auflösen nach der Flussrate $Q_{Ch}$ im Kanal erhält man:

$$Q_{Ch} = \frac{p_{cent}}{C_R \frac{\eta\, l_{Ch}}{A_{Ch}^2}} \quad (11)$$

Um einen kompletten Durchfluss durch das poröse Medium zu gewährleisten, muss gelten:

$$Q_{Ch} \leq Q_{max,m} \tag{12}$$

Durch Gleichsetzen der beiden Flussraten $Q_{max,m}$ und $Q_{Ch}$ wird der Umschlagspunkt definiert. Am Umschlagspunkt ist der Zentrifugaldruck der Flüssigkeitssäule im porösen Medium gleich der viskosen Dissipation im porösen Medium, die durch die vom Verbindungskanal vorgegebene Flussrate und einen theoretisch kompletten Durchfluss durch das poröse Medium auftritt. Wäre nun bei gleichbleibender Flussrate der Zentrifugaldruck kleiner, würde es zu einem Umfließen des porösen Mediums kommen.

Ein zusätzlicher, definierter Designfaktor D ermöglicht die spätere Anpassung der Flussrate an spezifische Anforderungen des Fluidikmoduls:

$$Q_{Ch} = D * Q_{max,m} \tag{13}$$

Durch Auflösen von Gleichung (13) nach D erhält man:

$$D = \frac{Q_{Ch}}{Q_{max,m}} \tag{14}$$

Bei Beispielen der vorliegenden Offenbarung, wird die Fluidikstruktur als funktionierend betrachtet, wenn mindestens die Hälfte der zu prozessierenden Flüssigkeit durch das poröse Medium fließt. Daraus ergibt sich, dass ein Designfaktor D von kleiner gleich zwei gewählt wird.

Durch Einsetzen von Gleichung (9) und Gleichung (11) in Gleichung (13) erhält man die obige Gleichung (1) zur Auslegung der Struktur.

Löst man Gleichung (1) nach D auf und wählt man den Designfaktor kleiner gleich zwei, ergibt sich:

$$D = \frac{{r_2}^2 - {r_1}^2}{2 * C_R \frac{l_{Ch}}{{A_{Ch}}^2} * r_{in,m} * A_m * \kappa} \leq 2 \tag{15}$$

In Tabelle 1 sind typische Größen für den Arbeitsbereich eines Fluidikmoduls aufgelistet, das nach Gleichung (16) ausgelegt wurde.

| Eigenschaft | Arbeitsbereich | Einheit |
|---|---|---|
| Flussraten Q | 0.001 bis 5 | µl/s |
| Permeabilität | 0.01 bis 10 | $\mu m^2$ |
| Designfaktor D | $0 < D \leq 2$ | - |
| Viskosität | < 300 | mPa·s |

Fig. 5 zeigt die Menge an Bypass, bezogen auf die Auftragsmenge, also die Flüssigkeitsmenge, die durch Zufluss-Struktur zugeführt wird, für Designfaktoren zwischen 0 und 3,5 dargestellt. Ist der Designfaktor D größer als der kritische Designfaktor D=2 geht mehr als die Hälfte der Auftragsmenge als Bypass über oder neben dem porösen Medium verloren. Bei Beispielen ist die Fluidikstruktur daher derart ausgelegt, dass 50% oder mehr der Auftragsmenge die poröse Struktur durchfließen.

Bei den obigen Berechnungen geht die radiale Position $r_1$, die einen Füllstand von 80% eines initialen Füllstands darstellt, ein. Bei Beispielen kann statt dieses Füllstands für die Berechnung eine radiale Position $r_i$ verwendet werden, die der radialen Position entspricht, an der der Flusswiderstandskanal in die erste Fluidkammer, also die Zufluss-Kammer, mündet. Ist die obige Bedingung für die radiale Position $r_1$ erfüllt, ist sie in jedem Fall auch für die radiale Position $r_i$ erfüllt.

Bei Beispielen können die Fluidikstrukturen derart ausgelegt sein, dass ein größerer Anteil der Auftragsmenge das poröse Medium durchfließt. Bei Beispielen kann der Designfaktor D kleiner gleich 1,5 gewählt werden. Bei Beispielen kann der Designfaktor D kleiner gleich 1 gewählt werden, so dass die gesamte Auftragsmenge das poröse Medium durchfließt.

Bei Beispielen weist das Fluidikmodul eine Mehrzahl von Fluidkammern, in denen jeweils ein poröses Medium angeordnet ist, und eine jeder Fluidkammer zugeordnete Zufluss-Struktur auf, so dass gleichzeitig Flüssigkeit durch mehrere poröse Medien geleitet werden kann. Die Zufluss-Strukturen können die Flüsse auf gleiche Flussraten begrenzen oder können die Flüsse auf unterschiedliche Flussraten begrenzen, so dass die Flüssigkeit mit unterschiedlichen Flussraten unterschiedliche poröse Medien passiert.

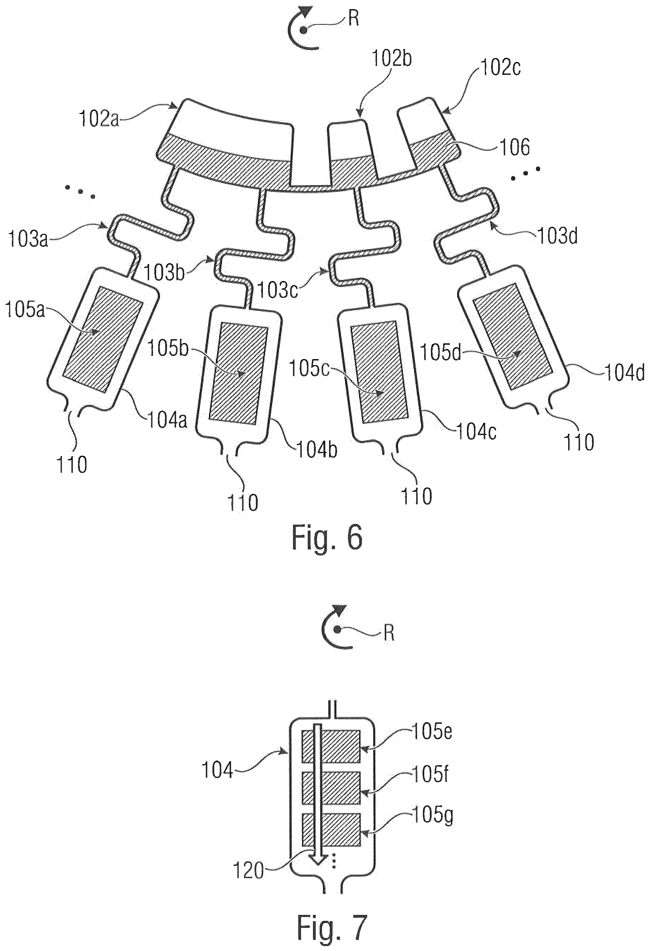

Bei Beispielen können somit Fluidikstrukturen des Fluidikmoduls zur Integration eines porösen Mediums parallel betrieben werden. Ein Beispiel solcher Fluidikstrukturen ist in Fig. 6 gezeigt. Eine erste Fluidkammer kann als ein radial innen liegendes Fluidreservoir oder als mehrere miteinander verbundene, radial innen liegende Fluidreservoire 102a, 102b, 102c ausgelegt sein. Die radial innen liegenden Fluidreservoire 102a, 102b, 102c können über Fluidkanäle verbunden sein, die jeweils radial äußere Abschnitte der Fluidreservoire miteinander verbinden. Das Fluidreservoir 102a ist über einen Flusswiderstandskanal 103a mit einer Fluidkammer 104a einer Mehrzahl von zweiten Fluidkammern fluidisch verbunden und über einen Flusswiderstandskanal 103b mit einer anderen Fluidkammer 104b der Mehrzahl von zweiten Fluidkammern verbunden. Jedes der Fluidreservoire 102b und 102c ist über einen jeweiligen Flusswiderstandskanal 103c, 103d mit einer zugeordneten zweiten Fluidkammer 104c, 104d fluidisch verbunden. In jeder der zweiten Fluidkammern ist ein poröses Medium 105a bis 105d angeordnet. Durch Drehen des Fluidikmoduls, in dem die in Fig. 6 gezeigten Fluidikstrukturen gebildet sind, kann somit Flüssigkeit parallel durch eine Mehrzahl von porösen Medien getrieben werden. Bei anderen Beispielen kann eine andere Anzahl von zweiten Fluidkammern mit jeweiligen Reservoiren verbunden sein. Bei anderen Beispielen können nicht fluidisch miteinander verbundene Reservoire als erste Fluidkammern vorgesehen sein, so dass unterschiedliche Flüssigkeiten durch die porösen Strukturen geleitet werden können. Die Flusswiderstandskanäle können gleiche oder unterschiedliche Flusswiderstände aufweisen. Weisen die Flusswiderstandskanäle unterschiedlichen Flusswiderstände auf, können unterschiedliche Flussraten bei gleicher Rotationsfrequenz parallel realisiert werden.

Bei Beispielen sind mehrere poröse Medien radial nach außen hintereinander in der Fluidkammer angeordnet. Ein solches Beispiel ist in Fig. 7 gezeigt, wo drei poröse Medien 105e, 105f und 105g radial auswärts hintereinander in einer Fluidkammer 102 angeordnet sind. Es ist klar, dass bei anderen Beispielen eine andere Anzahl von porösen Medien in der Fluidkammer angeordnet sein könnte. Somit kann eine beliebige Anzahl an porösen Medien 105e bis 105g sequentiell durchflossen werden, wie durch einen Pfeil 120 in Fig. 7 angedeutet ist. Dadurch kann beispielsweise ein Trockenlaufen von radial ausgedehnten porösen Medien aufgrund eines hohen Zentrifugaldrucks unterbunden werden.

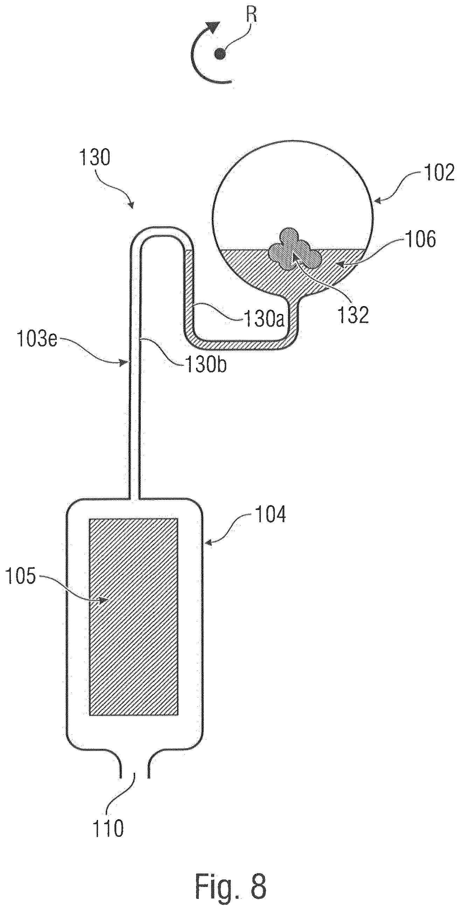

Bei Beispielen weist die Zufluss-Struktur einen Flusswiderstandskanal auf, der einen Heber mit einem radial ansteigenden Kanalabschnitt und einem dem radial ansteigenden Kanalabschnitt nachgeschalteten radial abfallenden Kanalabschnitt aufweist. Bei solchen Beispielen kann der Flusswiderstandskanal zwischen einer ersten und einer zweiten Fluidkammer zum Weiterschalten der Flüssigkeit benutzt werden. Beispielsweise zeigt Fig. 8 Fluidikstrukturen, bei denen ein Flusswiderstandskanal 103e, der einen Heber 130 mit einem radial ansteigenden Abschnitt 130a und einem radial abfallenden Abschnitt 130b aufweist, fluidisch zwischen eine erste Fluidkammer 102 und eine zweite Fluidkammer 104 geschaltet ist. In der zweiten Fluidkammer 104 ist wiederum ein poröses Medium 105 angeordnet. Damit können beispielsweise in der ersten Kammer 102 weitere Reagenzien 132 in die Flüssigkeit 106 eingemischt und nachdem Mischvorgang weiter auf das poröse Medium 105 geschaltet werden. Bei dem gezeigten Beispiel ist der Schalter durch den Heber 130 realisiert. Der Schalter kann beispielsweise geschaltet werden, indem eine Drehfrequenz von einer ersten Drehfrequenz auf eine zweite Drehfrequenz geändert wird, um einen Fluss der Flüssigkeit durch den Flusswiderstandskanal 103e einzuschalten. Bei der ersten Drehfrequenz kann dabei eine bei einer Drehung um das Rotationszentrum R auf die Flüssigkeit wirkende Zentrifugalkraft verhindern, dass Flüssigkeit durch den Flusswiderstandskanal 103e getrieben wird. Die Drehfrequenz kann dann zumindest temporär auf eine zweite Drehfrequenz gesenkt werden, bei der die Flüssigkeit kapillar über den Scheitel des Hebers 130 gezogen wird, wodurch der Flüssigkeitsfluss durch den Flusswiderstandskanal 103e eingeschaltet wird. Die Kapillarkraft in dem Flusswiderstandskanal kann zusätzlich durch eine Oberflächenbehandlung angepasst werden, um ein vorzeitiges Schalten des Hebers 130 zu vermeiden.

Bei Beispielen weist das Fluidikmodul eine Aliquotierstruktur auf, die eine Mehrzahl von Ausgängen aufweist. Die Aliquotierstruktur liefert an jedem Ausgang ein Aliquot der Flüssigkeit. Jeder Ausgang der Aliquotierstruktur ist mit einer anderen einer Mehrzahl von Aliquot-Kammern fluidisch gekoppelt. Jede einer Mehrzahl von Fluidkammern ist über eine zugehörige Zufluss-Struktur mit einer unterschiedlichen Aliquot-Kammer fluidisch verbunden.

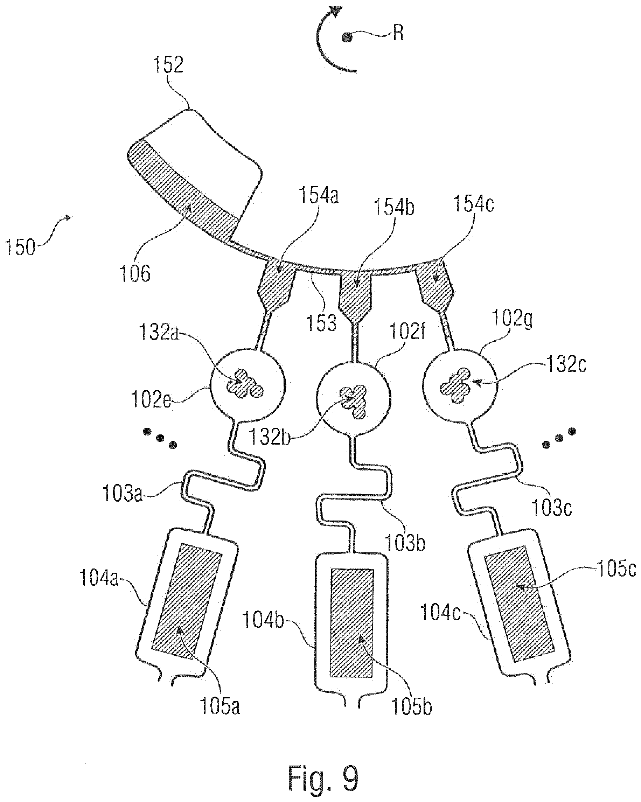

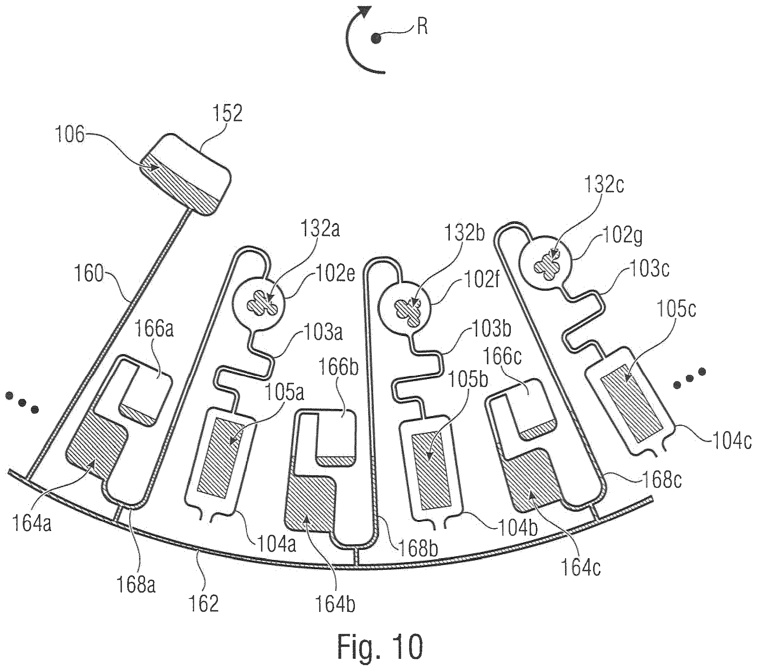

Die Figuren 9 und 10 zeigen solche Beispiele. Fig. 9 zeigt eine radial innen angeordnete Aliquotierstruktur 150 und Fig. 10 zeigt eine radial außen angeordnete Aliquotierstruktur.

Wie in Fig. 9 gezeigt ist, weist die Aliquotierstruktur 150 eine Einlasskammer 152 auf, die über einen Aliquotierkanal 153 mit Aliquotierkammern 154a, 154b und 154c fluidisch verbunden ist. Die Aliquotierkammern 154a, 154b und 154c dienen dazu, die Flüssigkeit 106 in eine Mehrzahl von Aliquots aufzuteilen. Die Aliquotierkammern 154a, 154b und 154c sind über jeweilige radial abfallende Fluidkanäle mit Aliquotkammern 102e, 102f und 102g verbunden. Die Aliquotkammern 102e, 102f und 102g stellen erste Fluidkammern dar, von denen jede über einen zugeordneten Flusswiderstandskanal 103a, 103b und 103 mit einer zweiten Fluidkammer 104a, 104b und 104c gekoppelt ist. Ein poröses Medium 105a, 105b und 105c ist in jeder der zweiten Fluidkammern 104a, 104b und 104c angeordnet. Die Flüssigkeit kann von der Einlasskammer zentrifugal in die Aliquotierkammern 154a, 154b und 154c verteilt werden, dort mit unterschiedlichen Reagenzien 132a, 132b und 132c versetzt werden und anschließend über den jeweiligen Flusswiderstandskanal 103a, 103b und 103c durch das jeweilige poröse Medium 105a, 105b und 105c getrieben werden.

Gemäß Fig. 10 ist die Aliquotierstruktur und insbesondere ein Aliquotierkanal der Aliquotierstruktur radial außen angeordnet. Eine Einlasskammer 152 ist über einen radial abfallenden Kanal 160 mit einem im Wesentlichen azimutal verlaufenden Aliquotierkanal 162 fluidisch verbunden. Aliquotierkammern 164a, 164b und 164c sind mit dem Aliquotierkanal 162 fluidisch gekoppelt. Die Aliquotierkammern 164a, 164b und 164c sind mit jeweiligen Kompressionskammern 166a, 166b, 166c fluidisch verbunden. Ferner sind die Aliquotierkammern 164a, 164b und 164c über radial einwärts (ansteigend) verlaufende Verbindungskanäle 168a, 168b und 168c mit Aliquotkammern 102e, 102f und 102g fluidisch verbunden. Durch Drehen der Fluidikstrukturen mit einer geeigneten Rotationsfrequenz kann bewirkt werden, dass Flüssigkeit 106 zunächst in die Aliquotierkammern 164a, 164b und 164c verteilt wird, wobei dabei Luft in den Kompressionskammern 166a, 166b und 166c komprimiert wird. Überschüssige Flüssigkeit wird ebenfalls in den Kompressionskammern 166a, 166b und 166c gesammelt und trägt zu einer zusätzlichen Erhöhung der Kompression der Luft in den Kompressionskammern bei. Durch Senken der Rotationsfrequenz und/oder andere geeignete Maßnahmen, wie z.B. Erwärmung, kann dann bewirkt werden, dass sich die Luft in den Kompressionskammern ausdehnt und die Flüssigkeit durch die Verbindungskanäle 168a, 168b und 168c in die Aliquotkammern 102e, 102f und 102g treibt. Dort kann die Flüssigkeit wieder mit unterschiedlichen Reagenzien 132a, 132b und 132c versetzt werden und anschließend über einen jeweiligen Flusswiderstandskanal 103a, 103b und 103c durch das jeweilige poröse Medium 105a, 105b und 105c getrieben werden.

Bei Beispielen ist das poröse Medium an einer Kammerwand der Fluidkammer fixiert und mit einem Abstand von zumindest einer weiteren Kammerwand der Fluidkammer angeordnet, so dass ein Bypass-Pfad existiert. Bei Beispielen ist das poröse Medium an einer Decke der Fluidkammer fixiert. Bei Beispielen ist das poröse Medium an einem Boden der Fluidkammer fixiert. Bei Beispielen sind in der Fluidkammer Führungsstrukturen vorgesehen sind, um die Flüssigkeit zu dem radial inneren Abschnitt des porösen Mediums zu leiten. Bei Beispielen kann die Führungsstruktur eine Einkerbung am Übergang von der Zufluss-Struktur in die Fluidkammer aufweisen, die ausgelegt ist, um die Flüssigkeit mit Hilfe von Kräften, die aus der Oberflächenspannung der zu leitenden Flüssigkeit resultieren, zu dem radial inneren Abschnitt des porösen Mediums zu leiten.

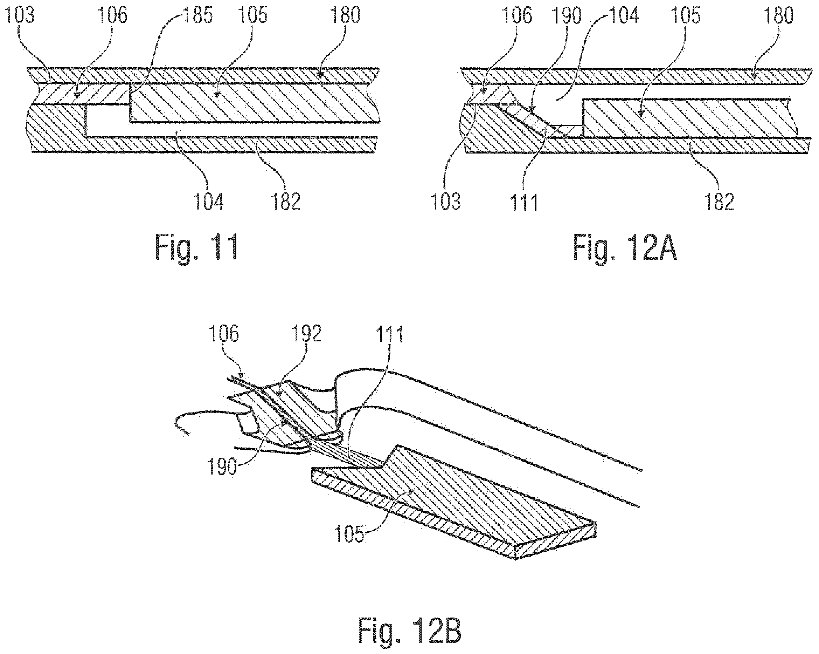

Fig. 11 zeigt eine schematische Querschnittansicht eines Beispiels von Fluidikstrukturen, bei denen ein poröses Medium 105, wie z.B. eine poröse Membran, an einer Decke 180 einer Fluidkammer 104 fixiert ist. Ein Flusswiderstandskanal 103 weist eine geringere Tiefe auf als die Fluidkammer 104 und mündet in dem der Decke 180 zugewandten Bereich in die Fluidkammer 104. Die Fluidkammer 104 und der Kanal 103 können beispielsweise von einer ersten Oberfläche aus in einem Substrat strukturiert sein, wobei die Oberfläche mit einem Deckel, der die Decke 180 bildet, versehen ist. Die Fluidkammer kann bis zu einer ersten Tiefe, an der ein Boden 182 der Fluidkammer angeordnet ist, in dem Substrat gebildet sein. Das Fluidkanal 103 kann bis zu einer geringeren Tiefe in dem Substrat gebildet sein. Ein Flüssigkeitsstrom bewegt sich durch den Flusswiderstandskanal 103 und aufgrund der Oberflächenspannung entlang der Decke 180 und trifft auf den radial innen liegenden Abschnitt 185 des porösen Mediums 105. Wie in Fig. 11 zu erkennen ist, ist das poröse Material von dem Boden 182 beabstandet, so dass ein Bypass-Pfad existiert.

Fig. 12A zeigt eine schematische Querschnittansicht eines Beispiels von Fluidikstrukturen, bei denen ein poröses Material auf einem Boden 182 einer Fluidkammer 104 fixiert ist. Fig. 12B zeigt eine schematische perspektivische Ansicht der Fluidikstrukturen von Fig. 12A. Zur Lenkung eines Stroms 111 der Flüssigkeit 106 auf den Kammerboden 182 ist ein Führungskanal 190 vorgesehen, der in einer schräg zum Kammerboden hin verlaufenden Oberfläche 192 gebildet ist. Der Führungskanal 192 ist durch eine Einkerbung in der Oberfläche 192 gebildet. Der offene Kanal 190 führt den Flüssigkeitsstrom 111 aus dem Flusswiderstandskanal 103 auf den Kammerboden 182 und somit auf das poröse Medium 105.

Es sei angemerkt, dass bei den beschriebenen Mikrofluidikstrukturen Gravitationskräfte gegenüber Kapillarkräften und Zentrifugalkräften vernachlässigbar sind.

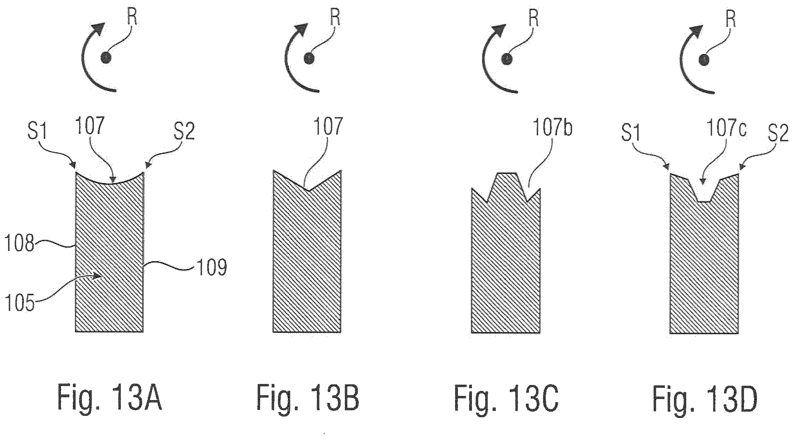

Bei Beispielen weist der radial innere Rand des porösen Medium eine Einkerbung mit einer Einkerbungskante auf, die zu bezüglich des Flusses seitlichen Rändern des porösen Mediums hin radial ansteigt. Der radial innere Bereich des porösen Mediums, auf den die Flüssigkeit trifft, befindet sich zwischen den seitlichen Rändern des porösen Mediums, zu denen hin die Einkerbungskante radial ansteigt. Die radial innen liegende Einkerbung des porösen Mediums zur Umfließungsvermeidung kann bei Beispielen unterschiedliche Geometrien aufweisen. Vier mögliche Varianten sind in den Figuren 13A bis 13D gezeigt. Für die Einkerbung gilt jeweils, dass die Einkerbungskante zu den Schnittpunkten S1, S2 mit den beiden radial verlaufenden Rändern 108, 109 des porösen Mediums 105 hin in Richtung radial innen ansteigen. Gemäß Fig. 13A weist die Einkerbung 107 eine abgerundete Form mit einem radialen Maximum in der Mitte der Einkerbung auf. Gemäß Fig. 13B weist die Einkerbung eine dreieckige Form auf, ebenfalls mit einem radialen Maximum in der Mitte der Einkerbung. Gemäß Fig. 13C weist die Einkerbung 107b zwischen zwei radialen Maxima ein radiales Minimum auf. Gemäß Fig. 13D weist die Einkerbung 107c ausgehend von einem radialen Maximum in der Mitte der Einkerbung bis zu den Schnittpunkten S1, S2 diskrete Bereiche mit unterschiedlicher Steigung auf.

Bei Beispielen der vorliegenden Offenbarung sind die Fluidikstrukturen derart ausgelegt, dass der Flüssigkeitsstrom aus der Zufluss-Struktur mittig oder im Wesentlichen mittig auf den radial inneren Abschnitt des porösen Mediums trifft. Bei Beispielen sind die Fluidikstrukturen derart ausgebildet, dass der Flüssigkeitsstrom mittig oder im Wesentlichen mittig auf die Einkerbung trifft. Bei Beispielen kann die Zufluss-Struktur radial innerhalb des radial inneren Abschnitts des porösen Mediums angeordnet sein und demselben gegenüberliegen, um den Flüssigkeitsstrom auf diesen Abschnitt zu richten.

Bei Beispielen der vorliegenden Offenbarung enthält die Flüssigkeit, die durch das poröse Medium geleitet wird, einen Reaktionsmix für eine (bio-)chemische Interaktion am porösen Medium. Diese Reaktion kann beispielsweise für eine (bio-)chemische Umsetzung oder auch zur Detektion von Biomolekülen geeignet sein, wie z.B. Goldnanopartikel oder Fluoreszenzpartikel mit immobilisierten Antikörpern. Überdies kann die Flüssigkeit einen Analyten enthalten, der nachgewiesen werden soll. Zusätzlich kann das poröse Medium mit Biomolekülen imprägniert sein, beispielsweise Fängerantikörpern, an welche Substanzen aus der Flüssigkeit anbinden können.

Bei Beispielen stellt das poröse Medium eine Festphase für Oberflächenreaktionen dar, wobei das poröse Medium mit einem reaktiven Komponenten, wie z.B. Biomolekülen, imprägniert sein kann. Bei Beispielen stellt das poröse Medium eine Festphase für Oberflächenanbindungsreaktionen dar.

Bei Beispielen kann ein optisches Auslesesystem vorgesehen sein, um das Ergebnis der Reaktion auszulesen. Hierzu können Teile des Fluidikmoduls und des Systems transparent sein, um ein optisches Auslesen durch solche Teile zu ermöglichen. Zusätzlich kann bei Beispielen eine Temperierungseinrichtung vorgesehen sein, um die Temperatur des Fluidikmoduls bei Bedarf während des kompletten Prozesses kontrolliert einzustellen. Dies ermöglicht es beispielsweise, gleiche Anbindungsraten der Substanzen Fluidikmodul-übergreifend zu realisieren.

Bei Beispielen der vorliegenden Offenbarung wird somit eine laterale Bewegung einer flüssigen Probe oder einer flüssigen Reagenzie entlang eines porösen Mediums, das auch als poröse Trägermatrix bezeichnet werden kann, nach radial auswärts bewirkt, indem die flüssige Probe durch Drehen des Fluidikmoduls mit einer Zentrifugalkraft beaufschlagt wird. Dadurch ermöglichen Beispiele der vorliegenden Offenbarung die Durchführung eines Lateralfluss-Immunoassays. Das poröse Medium kann eine offenporige Struktur mit einer mittleren Porengröße im Bereich von 0.05 bis 250 Mikrometern und eine Dicke in einem Bereich von 0,01 bis 5 mm aufweisen. Das poröse Material kann ein offenporiges gesintertes Material, offenporiges Polymer, offenporiges Keramikmaterial, offenporigen polymeren Schaum, offenporigen Verbundwerkstoff, Natur- oder Kunstfaserstoff, eine vernetzte Beadschüttung oder Nitrocellulose aufweisen.

Es wurde erkannt, dass durch Beispiele der vorliegenden Offenbarung zahlreiche Nachteile, die bei den eingangs beschriebenen bekannten Systemen, die eine Flusskontrolle durch ein poröses Medium bieten, auftreten, reduzieren oder beseitigt werden können, von denen im Folgenden einige genannt werden. Bei bekannten Systemen ist die Flussrate abhängig von der Kapillarität des porösen Mediums und damit werden die dort beschriebenen Verfahren immer durch die begrenzt veränderbaren Eigenschaften des porösen Mediums eingeschränkt. Die maximal mögliche Flussrate ist bei einem Fluss nach radial einwärts durch die Kapillarkraft begrenzt, da die Zentrifugalkraft den Fluss nur abbremsen kann und nicht beschleunigen kann. Hochviskose Medien, die sehr langsam durch das poröse Medium gezogen werden, können deshalb nur begrenzt prozessiert werden, da eine Flussratenbeschleunigung benötigt wird, verglichen mit dem rein kapillaren Fluss, um die für den Test benötigte Zeit anwenderfreundlich zu verkürzen. Die Flussrate ist abhängig von der bereits aufgestiegenen Flüssigkeitssäule im porösen Medium und damit zeitabhängig bei konstanter Rotationsfrequenz. Das zu prozessierende Flüssigkeitsvolumen ist durch die Aufnahmekapazität des porösen Mediums begrenzt. Durch das Einbringen eines sogenannten Waste-Vlieses kann die Aufnahmekapazität zwar erhöht werden, das Vlies benötigt jedoch zusätzlichen Platz und die Verbindung zwischen dem porösen Medium und dem Waste-Vlies ist eine zusätzliche Quelle für Flussratenvariationen zwischen den Fluidikmodulen. Die in der WO 2009/039239 A2 beschriebenen Verfahren sind nachteilig, da die Flüssigkeit direkt auf den porösen Testträger aufgebracht und durch anschließendes Anlegen einer Zentrifugalkraft bewegt wird. Dadurch ist das Probenvolumen durch die Flüssigkeitsaufnahmekapazität des porösen Mediums stark beschränkt, da eine kontinuierliche Flüssigkeitsaufgabe mit dem beschriebenen Apparat nicht möglich ist. Im Falle der Flussrichtung nach radial auswärts würde zusätzlich durch die anschließende Zentrifugation noch nicht aufgenommene, überstehende Restflüssigkeit unkontrolliert abzentrifugiert. Die Flüssigkeitsmenge ist somit auf die Aufnahmkapazität des porösen Mediums begrenzt. Dies ist unter anderem dann nachteilig, wenn größere Flüssigkeitsmengen, wie zum Beispiel größere Probenvolumina oder wie sie zum Beispiel beim Waschen vorkommen, aufgebracht werden sollen.. Des Weiteren wird die Analysenprobe während des Auftrags auf das poröse Medium unkontrolliert von dem porösen Medium aufgenommen. Für die beschriebene Flussrichtung radial einwärts gelten wiederum die diesbezüglich angegebenen Nachteile. Bei der US 2007/0054270 A1 ist das poröse Medium eine in eine Reaktionskammer eingebrachte Kugelschüttung. Zum Zurückhalten der Kügelchen und um einen vollständigen Durchfluss zu gewährleisten, werden Dichtungen benötigt. Je kleiner der Durchmesser der Kügelchen gewählt wird, desto vorteilhafter ist das Oberfläche-zu-Volumen-Verhältnis der Schüttung. Jedoch erhöht sich gleichzeitig der Herstellungsaufwand für die dafür benötigten Dichtungen zum Zurückhalten der kleineren Kügelchen. Ebenso ist generell die Vorlagerung von Kugelschüttungen eine technische Herausforderung. Kugelschüttungen für die Mikrofluidik können verglichen mit Schüttungen in der Makrowelt aufgrund von Verdunstungseffekten nur schwer flüssig gelagert werden. Für die Eintrocknung einer Kugelschüttung müssen daher aufwändige Vorkehrungen getroffen werden, um die Funktionalität der Kugeloberfläche zu gewährleisten, um zu verhindern, dass während Transport und Lagerung einzelne Kügelchen in dafür nicht vorgesehene Kanäle oder Kammern gelangen und um eine homogene Schüttung nach der Rekonstitution zu erhalten, nämlich eine gleichmäßige Verteilung der Kügelchen ohne Bildung von Kavitäten.

Im Gegensatz zu den bekannten Techniken kann vermittels der beschriebenen Strukturen gemäß Beispielen der vorliegenden Offenbarung auf dem Gebiet der zentrifugalen Mikrofluidik ein, vorausgesetzt die Flüssigkeit benetzt das poröse Medium, Kapillarkraftunabhängiger, total kontrollierbarer und kompletter (oder abhängig von der Wahl des Designfaktors D zumindest mehr als 50-prozentiger) Durchfluss durch ein poröses Medium erzielt werden. Für die Integration des porösen Mediums in die Struktur wird keine Dichtvorrichtung benötigt. Das poröse Medium kann auf einfache Weise an der Decke oder dem Boden einer Fluidkammer fixiert werden. Es lässt sich die Flussrate und somit auch die Verweilzeit der Analysenprobe im porösen Medium präzise über die Auslegung des durchflussbegrenzenden Flusswiderstandskanals und die Rotationsfrequenz einstellen, unabhängig von der Herstellungsgüte des porösen Mediums.

Damit kann die Inkubationszeit nicht nur verlängert, sondern auch verkürzt werden, verglichen mit einem kapillar getriebenen Durchfluss. Damit ist es erstmals mit dem Fluidikmodul der vorliegenden Offenbarung möglich, größere Probenvolumina einer viskosen Probe in einem sinnvollen Zeitrahmen kontrolliert zu prozessieren. Eine notwendige Verdünnung der Analysenprobe zur Viskositätserniedrigung ist gegebenenfalls nicht mehr notwendig. Diese Möglichkeit basiert insbesondere auf drei Faktoren, die generelle Vorteile gegenüber anderen Systemen darstellen:

- Die fluidische Weglänge durch das poröse Medium bleibt nach der Initialbefüllung des porösen Mediums mit der zu prozessierenden Flüssigkeit konstant, da keine weiteren Vliese, wie beispielsweise ein Waste-Vlies, benötigt werden und somit nicht vorgesehen sind.

- Die fluidische Weglänge durch das poröse Medium hat keinen Einfluss auf die Flussrate und kann daher beliebig kurz bzw. lang gewählt werden.

- Die antreibende Kraft des Durchflusses ist allein die Zentrifugalkraft. Dementsprechend kann durch eine Steigerung des zentrifugalen Drucks in der Flüssigkeit im porösen Medium die viskose Flüssigkeit mit Inkubationszeiten prozessiert werden, die vergleichbar mit denen niederviskoser Flüssigkeiten wären.

Ferner ermöglichen es Beispiele der vorliegenden Offenbarung, Viskositätsschwankungen zwischen den Analysenproben durch eine vorausgehende Viskositätsmessung (intern in der Disk oder extern im Labor) mit anschließender Rotationsfrequenzanpassung auszugleichen, was zu testübergreifend, gleichbleibenden Inkubationszeiten führt.

Beispiele der vorliegenden Offenbarung weisen eine Einrichtung zum Erfassen einer Information über die Viskosität der Flüssigkeit auf, wobei die Vorrichtung ausgelegt ist, um die Drehgeschwindigkeit der Drehung abhängig von der erfassten Information über die Viskosität einzustellen, um die Flussrate durch den Zufluss-Kanal einzustellen. Gemäß der vorliegenden Offenbarung ist die Strukturauslegung unabhängig von den Fluideigenschaften und der Rotationsfrequenz. Dies gilt jedoch nicht für die sich einstellende Flussrate. Diese ist abhängig von den Fluideigenschaften und der Rotationsfrequenz. So fließen beispielsweise hochviskose Fluide bei gleicher Frequenz langsamer durch das Fluidikmodul als niedrigviskose. Daher haben Viskositätsschwankungen der Flüssigkeitsprobe Einfluss auf die benötigte Prozessierzeit und damit auch auf die Verweilzeit der Biomoleküle in dem porösen Medium. Ist die Viskosität bekannt, beispielsweise durch eine experimentelle Bestimmung oder eine Messung auf dem Fluidikmodul, kann die Rotationsfrequenz angepasst werden, um eine Proben-unabhängige Flussrate zu erzielen, beispielsweise eine Flussrate von immer 0.05 $\mu$l/s unabhängig von der Viskosität. Somit kann beispielsweise der Variationskoeffizient eines Assays deutlich gesenkt werden.

Davon können im speziellen Assays, die ein poröses Medium als Festphase nutzen, profitieren, wie zum Beispiel Lateralflussassays. Eine Sensitivitätssteigerung ist zu erwarten, zum einen da die Inkubationszeit von niederviskosen Analysenproben verlängert werden kann. Damit werden keine Reaktanten mit einer schnellen Reaktionskinetik mehr benötigt und die Auswahlmöglichkeiten der verwendbaren Reaktionspartner werden erheblich vergrößert. Zum anderen kann, im Gegensatz zu bekannten Verfahren, das Probenvolumen unabhängig von der Membrangröße gewählt werden, da kein Waste-Vlies benötigt wird, und das Probenvolumen nur durch die Auslegung der peripheren mikrofluidischen Struktur beschränkt ist. Des Weiteren können viskose Proben unverdünnt prozessiert werden. Beide Vorteile erhöhen die Wahrscheinlichkeit, dass ein niederkonzentrierter Analyt in der Probe auf der Oberfläche des porösen Mediums anbindet.

Ebenso ermöglichen Beispiele der vorliegenden Offenbarung, den Flüssigkeitsstrom erstmals durch Abbremsen auf eine Rotationsfrequenz von 0 Hz zu stoppen, da der Fluss durch das poröse Medium (die Membran) nicht kapillargetrieben ist. Damit kann ein kontinuierliches Auslesen während des gesamten Assays realisiert werden, was wiederum für eine Vergrößerung des dynamischen Bereichs des Assays genutzt werden kann, da bei hohen Analyt-Konzentrationen der Assay vorzeitig beendet werden könnte.

Überdies können unterschiedliche Flüssigkeiten ohne zusätzlichen Aufwand sequentiell durch das poröse Medium getrieben werden. Somit können beispielsweise Waschschritte zwischen oder nach den (bio-)chemischen Interaktionen am porösen Medium durchgeführt werden.

Des Weiteren können insbesondere im Vergleich mit einem bekannten immunchromatographischen Schnelltest Reagenzien unter kontrollierten Bedingungen und in speziellen Mischkammern rehydriert werden, was die Wiederholgenauigkeit des Tests erhöht, verglichen mit der Rehydrierung aus einem Vlies unter einem kontinuierlichen Durchfluss. Ebenfalls kann die Wiederholgenauigkeit durch das Wegfallen weiterer Vliese (Proben- (Sample-), Konjugat- und Waste-Vlies) und damit auch das Wegfallen der Verbindungsflächen zwischen den Komponenten gesteigert werden.

Ebenso kann verglichen mit einem Lateralfluss-Teststreifen das gesamte Probenvolumen über das poröse Medium gedrückt werden, sodass insgesamt weniger Probenvolumen und damit auch weniger Reagenzien für das gleiche Ergebnis benötigt werden, da keine Flüssigkeit in einem Proben-Pad zurückbleibt.

Ergänzend kann am Ende des Prozesses Flüssigkeit im porösen Medium leicht mechanisch getrocknet werden, beispielsweise durch ein Ausschleudern. Die Membran befüllt sich im Gegensatz zu bekannten Verfahren, bei denen ein kapillar getriebener Fluss in Richtung radial einwärts implementiert ist, nicht erneut, sondern bleibt ungefüllt, was einen konstanten Hintergrund für eine mögliche nachfolgende optische Auswertung bietet und mögliche Folgereaktionen der Biomoleküle auf dem porösen Medium unterbindet.

Beispiele der vorliegenden Offenbarung bieten somit folgende Vorteile:

- Vollständig kontrollierter Fluss einer das poröse Medium benetzenden Flüssigkeit durch das poröse Medium in Richtung radial außen bei geringen oder keinem Bypass ohne die Notwendigkeit einer Dichtvorrichtung.
- Der Durchfluss ist entkoppelt von den Materialeigenschaften des porösen Mediums wie z. B. der Permeabilität und Kapillarkraft
- Die Flussrate durch das poröse Medium wird nur über die Rotationsfrequenz und den durchflussbegrenzenden Flusswiderstandskanal gesteuert. Damit kann die Flussrate präzise auf ein konstantes Niveau eingestellt werden, was wiederum ein akkurates Einstellen der Inkubationszeiten ermöglicht
- Die Auslegung des Fluidikmoduls zur Vermeidung von Bypassflüssen um ein integriertes, poröses Medium erfolgt unabhängig von Viskosität und Dichte der zu prozessierenden Flüssigkeit, sowie unabhängig von der genutzten Rotationsfrequenz
- Das maximale Probenvolumen ist nicht durch die Aufnahmekapazität des porösen Mediums begrenzt und kann beliebig gewählt werden, es werden keine zusätzlichen porösen Medien (Sample-, Konjugat- und Waste-Pad) benötigt
- Der Flüssigkeitsauftrag auf das poröse Medium kann zu jeder Zeit gestoppt werden, sodass im Stillstand eine Auslese des porösen Mediums durchgeführt werden kann
- Unterschiedliche Flüssigkeiten können ohne zusätzlichen Aufwand sequentiell durch das poröse Medium getrieben werden, beispielsweise zur Realisierung von Waschschritten
- Das poröse Medium kann mechanisch getrocknet werden (Ausschleudern), was einen homogenen Hintergrund bei einer optischen Auslese ergibt, sowie Folgereaktionen im porösen Medium unterbindet.

Beispiele der vorliegenden Offenbarung schaffen ein Fluidikmodul für die zentrifugale Mikrofluidik, zum Befüllen, Durchfließen und Entleeren eines integrierten, freiliegenden porösen Mediums mit einer das poröse Medium benetzenden Flüssigkeit von radial innen nach radial außen, bestehend aus mindestens einer ersten Kammer, welche über mindestens einen Verbindungskanal mit mindestens einer zweiten Kammer verbunden ist. Die zweite Kammer beinhaltet mindestens ein poröses Medium. Der fluidische Widerstand des Verbindungskanals ist derart ausgestaltet, dass unter Zentrifugation die Flüssigkeit durch das poröse Medium fließt, wobei unter Rotation die resultierende Flussrate von der ersten Kammer in die zweite Kammer zu der folgenden Bedingung führt: Wenn der gesamte Fluss des Flusswiderstandskanals durch das poröse Medium von radial innen nach radial außen fließen würde, würde ein viskoser Druckverlust $p_{Darcy}$ resultieren, der maximal dem 2-fachen des hydrostatischen Drucks $p_{hyd,mem}$ der Flüssigkeit im porösen Medium entspräche, wenn das poröse Medium über die gesamte radiale Länge mit Flüssigkeit gefüllt wäre. Bei einem solchen Fluidikmodul kann eine dem Flusswiderstandskanal nachfolgende Führungskanal-Struktur die Flüssigkeit auf das poröse Medium leiten. Das poröse Medium kann an der radial innen liegenden Position eingekerbt sein, wobei die Einkerbungskante an den Schnittpunkten mit den beiden radial verlaufenden Rändern des porösen Mediums in Richtung radial innen (Richtung Schnittpunkt) ansteigt. Die Struktur kann so ausgeführt sein, dass der Verbindungskanal zwischen der ersten und der zweiten Kammer als Heber ausgeführt ist. Eine vorgeschaltete Viskositätsmessung kann zur Rotationsfrequenzanpassung für die Prozessierung der Flüssigkeit genutzt werden. Die Flüssigkeit (wässrige Phase) kann einen Reaktionsmix für eine (bio-)chemische Interaktion am porösen Medium darstellen.

Beispiele der vorliegenden Offenbarung beziehen sich somit auf Fluidikmodule, Vorrichtungen und Verfahren, um Flüssigkeiten kontrolliert durch ein poröses Medium in Richtung radial auswärts zu treiben. Aufgabe der ist es dabei, bei minimalem Handhabungsaufwand den Fluss einer Flüssigkeit durch ein poröses Medium nach radial außen zu gewährleisten und ein Umfließen des porösen Mediums zu verhindern oder zu begrenzen, um damit die vollständige Kontrolle der Flussrate durch das poröse Medium zu erhalten. Ein kontinuierlicher Durchfluss durch ein poröses Medium nach radial auswärts bringt deutliche Vorteile mit sich, wurde jedoch bisher nach Veröffentlichungen und Expertenaussagen als unkontrollierbares und mit Bypass behaftetes Integrationskonzept angesehen.

Unter den Ausdruck Flüssigkeit bzw. flüssigen Phase, wie er hierin verwendet wird, fallen, wie Fachleuten offensichtlich ist, insbesondere auch Flüssigkeiten, die Feststoffbestandteile beinhalten, wie z.B. Suspensionen, biologische Proben und Reagenzien.

Beispiele der vorliegenden Offenbarung können insbesondere auf dem Gebiet der zentrifugalen Mikrofluidik Anwendung finden, bei der es um die Prozessierung von Flüssigkeiten im Femtoliter- bis Milliliter-Bereich geht. Entsprechend können die Allgemein können bei Beispielen der Offenbarung unterschiedliche Flusswiderstände (fluidische Widerstände, hydraulische Widerstände) jeweiliger Fluidkanäle über unterschiedliche Strömungsquerschnitte erreicht werden. Bei alternativen Beispielen können unterschiedliche Strömungswiderstände auch durch andere Mittel erreicht werden, beispielsweise unterschiedliche Kanallängen, in die Kanäle integrierte Hindernisse und dergleichen. Ist ein Vergleich zwischen Strömungswiderständen angegeben, so ist dabei jeweils von dem Strömungswiderstand gegenüber dem gleichen Fluid auszugehen, falls nichts anderes angegeben ist. Ist hierin von einem Fluidkanal die Rede, so ist eine Struktur gemeint, deren Längenabmessung von einem Fluideinlass zu einem Fluidauslass größer ist, beispielsweise mehr als 5-mal oder mehr als 10-mal größer, als die Abmessung bzw. Abmessungen, die den Strömungsquerschnitt definiert bzw. definieren. Somit kann ein Fluidkanal einen Strömungswiderstand für ein Durchströmen desselben von dem Fluideinlass zu dem Fluidauslass aufweisen. Dagegen ist eine Fluidkammer hierein eine Kammer die solche Abmessungen aufweisen kann, dass ein relevanter Strömungswiderstand in derselben nicht auftritt.

Obwohl einige Aspekte der vorliegenden Offenbarung als Merkmale im Zusammenhang einer Vorrichtung beschrieben wurden, ist es klar, dass eine solche Beschreibung ebenfalls als eine Beschreibung entsprechender Verfahrensmerkmale betrachtet werden kann. Obwohl einige Aspekte als Merkmale im Zusammenhang mit einem Verfahren beschrieben wurden, ist klar, dass eine solche Beschreibung auch als eine Beschreibung entsprechender Merkmale einer Vorrichtung bzw. der Funktionalität einer Vorrichtung betrachtet werden können. aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Beispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen. Solche Kombinationen seien umfasst, es sei denn es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

Die oben beschriebenen Beispiele sind nur darstellend für die Grundsätze der vorliegenden Offenbarung. Es ist zu verstehen, dass Modifikationen und Variationen der Anordnungen und der Einzelheiten, die beschrieben sind, für Fachleute offensichtlich sind. Es ist daher beabsichtigt, dass die Offenbarung nur durch die beigefügten Patentansprüche und nicht durch die spezifischen Einzelheiten, die zum Zwecke der Beschreibung und Erklärung der Beispiele dargelegt sind, begrenzt ist.

## Patentansprüche

**1.** Vorrichtung zum Leiten einer Flüssigkeit durch ein poröses Medium mit folgenden Merkmalen:

einem um ein Rotationszentrum (R) drehbaren Fluidikmodul (10), das eine Fluidkammer (12, 104, 104a - 104d) und eine Zufluss-Struktur (14, 103, 113, 103a - 103e) aufweist,

einem porösen Medium (16, 105, 105a - 105g), das in der Fluidkammer (12, 104, 104a - 104d) angeordnet ist, um einen durch Zentrifugalkraft bewirkten Fluss der Flüssigkeit, die auf einen radial inneren Abschnitt des porösen Mediums (16, 105, 105a - 105g) trifft, zu einem radial äußeren Abschnitt des porösen Mediums (16, 105, 105a - 105g) zu ermöglichen, wobei das poröse Medium (16, 105, 105a - 105g) bezüglich des Flusses seitlich zumindest teilweise von Kammerwänden der Fluidkammer (12, 104, 104a - 104d) beabstandet ist, so dass eine fluidische Verbindung zwischen dem radial inneren Abschnitt des porösen Mediums (16, 105, 105a - 105g) und dem radial äußeren Abschnitt des porösen Mediums (16, 105, 105a - 105g) außerhalb des porösen Mediums (16, 105, 105a - 105g) existiert, die zwischen den Kammerwänden und dem porösen Medium (16, 105, 105a - 105g) einen möglichen Bypass-Pfad für einen Flüssigkeitsstrom nicht durch das poröse Medium (16, 105, 105a - 105g) darstellt,

wobei die Zufluss-Struktur (14, 103, 113, 103a - 103e) ausgebildet ist, um einen durch Zentrifugalkraft bewirkten Zufluss der Flüssigkeit zu dem radial inneren Abschnitt des porösen Mediums (16, 105, 105a - 105g) auf eine erste Flussrate zu begrenzen,
wobei ein Verhältnis der ersten Flussrate zu einer maximal möglichen Flussrate durch das poröse Medium (16, 105, 105a - 105g) nicht größer als zwei ist.

**2.** Vorrichtung nach Anspruch 1, bei der die Zufluss-Struktur (14, 103, 113, 103a - 103e) zumindest einen Flusswiderstandskanal (103, 113, 103a - 103e) und/oder zumindest eine Düse, und/oder zumindest ein poröses Medium (16, 105, 105a - 105g) und/oder zumindest eine Bead-Schüttung aufweist, und wobei die Zufluss-Struktur (14, 103, 113, 103a - 103e) in einem radialen Abstand $r_i$ von dem Rotationszentrum (R) in eine Zufluss-Kammer mündet und in einem radialen Abstand $r_2$ von dem Rotationszentrum (R) in die Fluidkammer (12, 104, 104a - 104d) mündet, mit $r_i < r_2$.

**3.** Vorrichtung nach Anspruch 2, bei der die Zufluss-Struktur (103e) einen Flusswiderstandskanal aufweist, der einen Heber (130) mit einem radial ansteigenden Kanalabschnitt (130a) und einem dem radial ansteigenden Kanalabschnitt (130a) nachgeschalteten radial abfallenden Kanalabschnitt (130b) aufweist.

**4.** Vorrichtung nach einem der Ansprüche 1 bis 3, bei der der radial innere Abschnitt des porösen Mediums (16, 105, 105a - 105g) eine Einkerbung (107, 107b, 107c) mit einer Einkerbungskante aufweist, die zu bezüglich des Flusses seitlichen Rändern des porösen Mediums (16, 105, 105a - 105g) hin radial ansteigt.

**5.** Vorrichtung nach einem der Ansprüche 1 bis 4, bei der das poröse Medium (16, 105, 105a - 105g) eine Festphase für Oberflächenreaktionen ist, eine Festphase für Oberflächenanbindungsreaktionen ist, mit reaktiven Komponenten imprägniert ist, und/oder mit Biomolekülen imprägniert ist.

**6.** Vorrichtung nach einem der Ansprüche 1 bis 5, bei der mehrere poröse Medien (105e - 105g) radial nach außen hintereinander in der Fluidkammer (104) angeordnet sind.

**7.** Vorrichtung nach einem der Ansprüche 1 bis 6, bei der in der Fluidkammer (12, 104, 104a - 104d) Führungsstrukturen vorgesehen sind, um die Flüssigkeit zu dem radial inneren Abschnitt des porösen Mediums (16, 105, 105a - 105g) zu leiten.

**8.** Vorrichtung nach Anspruch 7, wobei die Führungsstrukturen eine Einkerbung (190) am Übergang von der Zufluss-Struktur (103) in die Fluidkammer (104) aufweisen, die ausgelegt ist, um die Flüssigkeit mit Hilfe von Kräften, die aus der Oberflächenspannung der zu leitenden Flüssigkeit resultieren, zu dem radial inneren Abschnitt des porösen Mediums (105) zu leiten.

**9.** Vorrichtung nach einem der Ansprüche 1 bis 8, bei der das Fluidikmodul (10) eine Mehrzahl von Fluidkammern (104a - 104d), in denen jeweils ein poröses Medium (105a - 105d) angeordnet ist, und eine Zufluss-Struktur (103a - 103d) für jede Fluidkammer (104a - 104d) aufweist, so dass gleichzeitig Flüssigkeit durch mehrere poröse Medien (105a - 105d) geleitet werden kann, wobei die Zufluss-Strukturen (103a - 103d) die Flüsse auf gleiche oder unterschiedliche Flussraten begrenzen.

**10.** Vorrichtung nach Anspruch 9, bei der das Fluidikmodul (10) folgende Merkmale aufweist:

eine Aliquotierstruktur (150) mit einer Mehrzahl von Ausgängen, die ausgelegt ist, um an jedem Ausgang ein Aliquot der Flüssigkeit zu liefern, und
eine Mehrzahl von Aliquot-Kammern (154a - 154c), von denen jede mit einem Ausgang der Aliquotierstruktur (150) fluidisch gekoppelt ist,
wobei jede der Fluidkammern (104a - 104d) über die zugehörige Zufluss-Struktur (103a - 103d) mit einer unterschiedlichen Aliquot-Kammer (154a - 154c) fluidisch verbunden ist.

**11.** Vorrichtung nach einem der Ansprüche 1 bis 10, die ferner zumindest eines der folgenden Merkmale aufweist:

eine Temperierungseinrichtung (32), die ausgelegt ist, um die Temperatur des Fluidikmoduls (10) einzustellen,
eine Erfassungseinrichtung (34), die ausgelegt ist, um ein Ergebnis einer Reaktion der Flüssigkeit mit dem porösen Medium (16, 105, 105a - 105g) zu erfassen.

**12.** Vorrichtung nach einem der Ansprüche 1 bis 11, die einen Antrieb (24) aufweist, der ausgelegt ist, um das Fluidikmodul (10) mit der Drehung zu beaufschlagen und die ferner eine Einrichtung (36) zum Erfassen einer Information über die Viskosität der Flüssigkeit aufweist, wobei die Vorrichtung ausgelegt ist, um die Drehgeschwindigkeit der Drehung abhängig von der erfassten Information über die Viskosität einzustellen, um die Flussrate durch die Zufluss-Struktur (14, 103, 113, 103a - 103e) einzustellen.

**13.** Verfahren zum Leiten einer Flüssigkeit durch ein poröses Medium (16, 105, 105a - 105g) mit folgenden Merkmalen:

Bereitstellen eines um ein Rotationszentrum (R) drehbaren Fluidikmoduls (10), das eine Fluidkammer (12, 104, 104a - 104d) und eine Zufluss-Struktur (14, 103, 113, 103a - 103e) aufweist, wobei ein poröses Medium (16, 105, 105a - 105g), das in der Fluidkammer (12, 104, 104a - 104d) angeordnet ist, um einen durch Zentrifugalkraft bewirkten Fluss der Flüssigkeit, die auf einen radial inneren Abschnitt des porösen Mediums (16, 105, 105a - 105g) trifft, zu einem radial äußeren Abschnitt des porösen Mediums (16, 105, 105a - 105g) zu ermöglichen, wobei das poröse Medium (16, 105, 105a - 105g) bezüglich des Flusses seitlich zumindest teilweise von Kammerwänden der Fluidkammer (12, 104, 104a - 104d) beabstandet ist, so dass eine fluidische Verbindung zwischen dem radial inneren Abschnitt des porösen Mediums (16, 105, 105a - 105g) und dem radial äußeren Abschnitt des porösen Mediums (16, 105, 105a - 105g) außerhalb des porösen Mediums (16, 105, 105a - 105g) existiert, die zwischen den Kammerwänden und dem porösen Medium (16, 105, 105a - 105g) einen möglichen Bypass-Pfad für einen Flüssigkeitsstrom nicht durch das poröse Medium (16, 105, 105a - 105g) darstellt, wobei die Zufluss-Struktur (14, 103, 113, 103a - 103e) ausgebildet ist, um einen durch Zentrifugalkraft bewirkten Zufluss der Flüssigkeit zu dem radial inneren Abschnitt des porösen Mediums (16, 105, 105a - 105g) auf eine erste Flussrate zu begrenzen, und wobei ein Verhältnis der ersten Flussrate zu einer maximal möglichen Flussrate durch das poröse Medium (16, 105, 105a - 105g) nicht größer als zwei ist; und
Drehen des Fluidikmoduls (10) um das Rotationszentrum (R), um den Zufluss der Flüssigkeit durch die Zufluss-Struktur (14, 103, 113, 103a - 103e) zu dem radial inneren Abschnitt des porösen Mediums (16, 105, 105a - 105g) zu bewirken und die Flüssigkeit durch das poröse Medium (16, 105, 105a - 105g) zu leiten.

**14.** Verfahren nach Anspruch 13, das ferner ein Stoppen des Drehens des Fluidikmoduls (10) aufweist, um den Fluss der Flüssigkeit durch das poröse Medium (16, 105, 105a - 105g) anzuhalten, oder das ferner ein Leiten von mehreren unterschiedlichen Flüssigkeiten nacheinander durch das poröse Medium (16, 105, 105a - 105g) aufweist.

**15.** Verfahren nach einem der Ansprüche 13 oder 14, bei dem die Zufluss-Struktur (103e) einen Flusswiderstandskanal (103e) aufweist, der einen Heber (130) einem radial ansteigenden Kanalabschnitt (130a) und einem dem radial ansteigenden Kanalabschnitt (130a) nachgeschalteten radial abfallenden Kanalabschnitt (130b) aufweist, wobei das Verfahren ein Ändern einer Drehfrequenz der Drehung zwischen einer ersten Drehfrequenz und einer zweiten Drehfrequenz aufweist, um einen Fluss der Flüssigkeit durch den Flusswiderstandskanal (103e) einzuschalten, und das ferner ein Mischen von Reagenzien in die Flüssigkeit in einer dem Flusswiderstandskanal (103e) vorgeschalteten Zufluss-Kammer (102) aufweist.

## Claims

**1.** An apparatus for directing a liquid through a porous medium, comprising:

a fluidic module (10) rotatable about a center of rotation (R) and comprising a fluid chamber (12, 104, 104a -104d) and an inflow structure (14, 103, 113, 103a -103e),
a porous medium (16, 105, 105a - 105g) disposed in the fluid chamber (12, 104, 104a - 104d) to allow centrifugal force-effected flow of the liquid impinging on a radially inner portion of the porous medium (16, 105, 105a - 105g) to a radially outer portion of the porous medium (16, 105, 105a - 105g), wherein the porous medium (16, 105, 105a - 105g) is laterally at least partially spaced apart from chamber walls of the fluid chamber (12, 104, 104a - 104d) with respect to the flow, so that a fluid connection exists between the radially inner portion of the porous medium (16, 105, 105a - 105g) and the radially outer portion of the porous medium (16, 105, 105a - 105g) outside the porous medium (16, 105, 105a - 105g), which represents a possible bypass path for a liquid flow not through the porous medium (16, 105, 105a - 105g) between the chamber walls and the porous medium (16, 105, 105a - 105g),
wherein the inflow structure (14, 103, 113, 103a - 103e) is configured to limit a centrifugal force-effected inflow of the liquid to the radially inner portion of the porous medium (16, 105, 105a - 105g) to a first flow rate,
wherein a ratio of the first flow rate to a maximum possible flow rate through the porous medium (16, 105, 105a - 105g) is not greater than two.

2. The apparatus according to claim 1, wherein the inflow structure (14, 103, 113, 103a - 103e) comprises at least one flow resistance channel (103, 113, 103a - 103e) and/or at least one nozzle and/or at least one porous medium (16, 105, 105a - 105g) and/or at least one bead fill, and wherein the inflow structure (14, 103, 113, 103a - 103e) opens into an inflow chamber at a radial distance $r_i$ from a center of rotation (R) and opens into the fluid chamber (12, 104, 104a - 104d) at a radial distance $r_2$ from the center of rotation (R), with $r_i < r_2$.

3. The apparatus according to claim 2, wherein the inflow structure (103e) comprises a flow resistance channel comprising a siphon (130) with a radially rising channel portion (130a) and a radially falling channel portion (130b) downstream of the radially rising channel portion (130a).

4. The apparatus according to any one of claims 1 to 3, wherein the radially inner portion of the porous medium (16, 105, 105a - 105g) comprises a notch (107, 107b, 107c) with a notch edge that rises radially towards edges of the porous medium (16, 105, 105a - 105g) that are lateral with respect to the flow.

5. The apparatus according to any one of claims 1 to 4, wherein the porous medium (16, 105, 105a - 105g) is a solid phase for surface reactions, is a solid phase for surface attachment reactions, is impregnated with reactive components and/or is impregnated with biomolecules.

6. The apparatus according to any one of claims 1 to 5, wherein several porous media (105e - 105g) are arranged radially outward sequentially in the fluid chamber (104).

7. The apparatus according to any one of claims 1 to 6, wherein guiding structures are provided in the fluid chamber (12, 104, 104a - 104d) to guide the liquid to the radially inner portion of the porous medium (16, 105, 105a - 105g).

8. The apparatus according to claim 7, wherein the guiding structure includes a notch (190) at the transition from the inflow structure (103) to the fluid chamber (104) that is configured to guide the liquid to the radially inner portion of the porous medium (105) by means of forces resulting from the surface tension of the liquid to be guided.

9. The apparatus according to any one of claims 1 to 8, wherein the fluidic module (10) comprises a plurality of fluid chambers (104a- 104d), each having a porous medium (105a - 105d) disposed therein, and an inflow structure (103a - 103d) for each fluid chamber (104a - 104d) such that liquid can be directed simultaneously through several porous media (105a - 105d), the inflow structures (103a - 103d) limiting the flows to equal or different flow rates.

10. The apparatus according to claim 9, wherein the fluidic module (10) comprises:

an aliquoting structure (150) comprising a plurality of outputs configured to provide an aliquot of the liquid at each output, and
a plurality of aliquot chambers (154a - 154c), each fluidically coupled to an outlet of the aliquoting structure (150), wherein each of the fluid chambers (104a - 104d) is fluidically connected to a different aliquot chamber (154a - 154c) via the associated inflow structure (103a - 103d).

11. The apparatus according to any one of claims 1 to 10, further comprising at least one of:

temperature control means (32) configured to adjust the temperature of the fluidic module (10),
detection means (34) configured to detect a result of a reaction of the liquid with the porous medium (16, 105, 105a - 105g).

12. The apparatus according to any one of claims 1 to 11, comprising a drive (24) configured to provide the fluidic module (10) with the rotation, and further comprising means (36) for detecting information about the viscosity of the fluid, the apparatus being configured to adjust the rotational speed of the rotation depending on the detected information about the viscosity to adjust the flow rate through the inflow structure (14, 103, 113, 103a - 103e).

13. A method for directing a liquid through a porous medium (16, 105, 105a - 105g), comprising:

providing a fluidic module (10) rotatable about a center of rotation (R), which comprises a fluid chamber (12, 104, 104a - 104d) and an inflow structure (14, 103, 113, 103a - 103e), wherein a porous medium (16, 105, 105a - 105g) is disposed in the fluid chamber (12, 104, 104a - 104d) to allow a centrifugal force-effected flow of the liquid impinging on a radially inner portion of the porous medium (16, 105, 105a - 105g) to a radially outer portion of the porous medium (16, 105, 105a - 105g), wherein the porous medium (16, 105, 105a - 105g) is laterally at least partially spaced apart from chamber walls of the fluid chamber (12, 104, 104a - 104d) with respect to the flow, so that a fluidic connection exists between the radially inner portion of the porous medium (16, 105, 105a - 105g) and the radially outer portion of the porous medium (16, 105, 105a - 105g) outside the porous medium (16, 105, 105a - 105g), which represents a possible bypass path for a liquid flow not through the porous medium (16, 105, 105a - 105g) between the chamber walls and the porous medium (16, 105, 105a - 105g), wherein the inflow structure (14, 103, 113, 103a - 103e) is configured to limit centrifugal force-effected inflow of the liquid to the radially inner portion of the porous medium (16, 105, 105a - 105g) to a first flow rate, and wherein a ratio of the first flow rate to a maximum possible flow rate through the porous medium (16, 105, 105a - 105g) is not greater than two; and

rotating the fluidic module (10) about the center of rotation (R) to cause the inflow of the liquid through the inflow structure (14, 103, 113, 103a -103e) to the radially inner portion of the porous medium (16, 105, 105a - 105g) and to direct the liquid through the porous medium (16, 105, 105a - 105g).

**14.** The apparatus according to claim 13, further comprising stopping the rotation of the fluidic module (10) to stop the flow of the liquid through the porous medium (16, 105, 105a - 105g), or further comprising directing several different liquids sequentially through the porous medium (16, 105, 105a - 105g).

**15.** The method according to any of claims 13 or 14, wherein the inflow structure (103e) comprises a flow resistance channel (103e) comprising a siphon (130) with a radially rising channel portion (130a) and a radially falling channel portion (130b) downstream of the radially rising channel portion (130a), the method comprising changing a rotational frequency of the rotation between a first rotational frequency and a second rotational frequency to turn on a flow of the liquid through the flow resistance channel (103e), and further comprising mixing reagents into the liquid in an inflow chamber (102) upstream of the flow resistance channel (103e).

## Revendications

**1.** Dispositif pour conduire un liquide à travers un milieu poreux, aux caractéristiques suivantes:

un module à fluide (10) pouvant tourner autour d'un centre de rotation (R) qui présente une chambre à fluide (12, 104, 104a à 104d) et une structure d'afflux (14, 103, 113, 103a à 103e),

un milieu poreux (16, 105, 105a à 105g) qui est disposé dans la chambre à fluide (12, 104, 104a à 104d) pour permettre une circulation du liquide provoquée par une force centrifuge qui arrive sur un segment radialement intérieur du milieu poreux (16, 105, 105a à 105g) vers un segment radialement extérieur du milieu poreux (16, 105, 105a à 105g), où le milieu poreux (16, 105, 105a à 105g) est, par rapport au flux, latéralement distant au moins partiellement des parois de chambre de la chambre à fluide (12, 104, 104a à 104d), de sorte qu'il existe une connexion fluidique entre le segment radialement intérieur du milieu poreux (16, 105, 105a à 105g) et le segment radialement extérieur du milieu poreux (16, 105, 105a à 105g) à l'extérieur du milieu poreux (16, 105, 105a à 105g) qui représente, entre les parois de chambre et le milieu poreux (16, 105, 105a à 105g), un trajet de contournement possible pour un courant de liquide ne traversant pas le milieu poreux (16, 105, 105a à 105g), dans lequel la structure d'afflux (14, 103, 113, 103a à 103e) est conçue pour limiter un afflux du liquide provoqué par la force centrifuge vers le segment radialement intérieur du milieu poreux (16, 105, 105a à 105g) à une première vitesse de circulation,

dans lequel un rapport entre la première vitesse de circulation et une vitesse de circulation maximale possible à travers le milieu poreux (16, 105, 105a à 105g) n'est pas supérieur à deux.

**2.** Dispositif selon la revendication 1, dans lequel la structure d'afflux (14, 103, 113, 103a à 103e) présente au moins un canal de résistance à la circulation (103, 113, 103a à 103e) et/ou au moins une buse, et/ou au moins un milieu poreux (16, 105, 105a à 105g) et/ou au moins une charge en vrac de perles, et dans lequel la structure d'afflux (14, 103, 113, 103a à 103e) débouche à une distance radiale $r_i$ du centre de rotation (R) dans une chambre d'afflux et débouche à une distance radiale $r_2$ du centre de rotation (R) dans la chambre à fluide (12, 104, 104a à 104d), où $r_i < r_2$.

**3.** Dispositif selon la revendication 2, dans lequel la structure d'afflux (103e) présente un canal de résistance à la circulation qui présente un vérin (130) avec un segment de canal montant radialement (130a) et un segment de canal descendant radialement (130b) connecté en aval du segment de canal montant radialement (130a).

**4.** Dispositif selon l'une des revendications 1 à 3, dans lequel le segment radialement intérieur du milieu poreux (16, 105, 105a à 105g) présente une entaille (107, 107b, 107c) avec un bord d'entaille qui monte radialement vers les bords du milieu poreux (16, 105, 105a à 105g) latéraux par rapport au flux.

**5.** Dispositif selon l'une des revendications 1 à 4, dans lequel le milieu poreux (16, 105, 105a à 105g) est une phase solide pour les réactions en surface, est une phase solide pour les réactions de liaison en surface, est imprégné de composants réactifs, et/ou est imprégné de biomolécules.

**6.** Dispositif selon l'une des revendications 1 à 5, dans lequel plusieurs milieux poreux (105e à 105g) sont disposés radialement vers l'extérieur l'un derrière l'autre dans la chambre à fluide (104).

**7.** Dispositif selon l'une des revendications 1 à 6, dans lequel sont prévues dans la chambre à fluide (12, 104, 104a à 104d) des structures de guidage destinées à conduire le liquide vers le segment radialement intérieur du milieu poreux (16, 105, 105a à 105g).

**8.** Dispositif selon la revendication 7, dans lequel les structures de guidage présentent une entaille (190) à la transition de la structure d'afflux (103) dans la chambre à fluide (104) qui est conçue pour guider le liquide au moyen de forces qui résultent de la tension superficielle du liquide à conduire vers le segment radialement intérieur du milieu poreux (105).

**9.** Dispositif selon l'une des revendications 1 à 8, dans lequel le module à fluide (10) présente une pluralité de chambres à fluide (104a à 104d) dans chacune desquelles est disposé un milieu poreux (105a à 105d), et une structure d'afflux (103a à 103d) pour chaque chambre à fluide (104a à 104d), de sorte que du liquide puisse être guidé simultanément à travers plusieurs milieux poreux (105a à 105d), dans lequel les structures d'afflux (103a à 103d) limitent les flux aux mêmes vitesses de circulation ou à des vitesses de circulation différentes.

**10.** Dispositif selon la revendication 9, dans lequel le module à fluide (10) présente les caractéristiques suivantes:

une structure d'aliquotage (150) avec une pluralité de sorties qui est adaptée pour fournir à chaque sortie une aliquote du liquide, et
une pluralité de chambres d'aliquotes (154a à 154c) dont chacune est couplée de manière fluidique à une sortie de la structure d'aliquote (150),
dans lequel chacune des chambres à fluide (104a à 104d) est connectée de manière fluidique par l'intermédiaire de la structure d'afflux associée (103a à 103d) à une chambre d'aliquotes différente (154a à 154c).

**11.** Dispositif selon l'une des revendications 1 à 10, qui présente par ailleurs au moins une des caractéristiques suivantes:

un dispositif de régulation de température (32) qui est conçu pour régler la température du module à fluide (10),
un dispositif de détection (34) qui est conçu pour détecter un résultat d'une réaction du liquide avec le milieu poreux (16, 105, 105a à 105g).

**12.** Dispositif selon l'une des revendications 1 à 11, qui présente un entraînement (24) qui est conçu pour appliquer la rotation au module à fluide (10) et qui présente par ailleurs un moyen (36) destiné à détecter une information sur la viscosité du liquide, dans lequel le dispositif est conçu pour régler la vitesse de rotation en fonction de l'information détectée relative à la viscosité pour régler la vitesse de circulation à travers la structure d'afflux (14, 103, 113, 103a à 103e).

**13.** Procédé pour conduire un liquide à travers un milieu poreux (16, 105, 105a à 105g), aux caractéristiques suivantes consistant à:

prévoir un module à fluide (10) pouvant tourner autour d'un centre de rotation (R) qui présente une chambre à fluide (12, 104, 104a à 104d) et une structure d'afflux (14, 103, 113, 103a à 103e), où un milieu poreux (16, 105, 105a à 105g) qui est disposé dans la chambre à fluide (12, 104, 104a à 104d) pour permettre une circulation du liquide provoquée par une force centrifuge qui arrive sur un segment radialement intérieur du milieu poreux (16, 105, 105a à 105g) vers un segment radialement extérieur du milieu poreux (16, 105, 105a à 105g), où le milieu poreux (16, 105, 105a à 105g) est, par rapport au flux, latéralement distant au moins partiellement des parois de chambre de la chambre à fluide (12, 104, 104a à 104d), de sorte qu'il existe une connexion fluidique entre le segment radialement intérieur du milieu poreux (16, 105, 105a à 105g) et le segment radialement extérieur du milieu poreux (16, 105, 105a à 105g) à l'extérieur du milieu poreux (16, 105, 105a à 105g) qui représente, entre les parois de chambre et le milieu poreux (16, 105, 105a à 105g), un trajet de contournement possible pour un courant de liquide ne traversant pas le milieu poreux (16, 105, 105a à 105g), où la structure d'afflux (14, 103, 113, 103a à 103e) est conçue pour limiter un afflux du liquide provoqué par la force centrifuge vers le segment radialement intérieur du milieu poreux (16, 105, 105a à 105g) à une première vitesse de circulation, et où un rapport entre la première vitesse de circulation et une vitesse de circulation maximale possible à travers le milieu poreux (16, 105, 105a à 105g) n'est pas supérieur à deux; et
faire tourner le module à fluide (10) autour du centre de rotation (R) pour permettre l'afflux du liquide à travers la structure d'afflux (14, 103, 113, 103a à 103e) vers le segment radialement intérieur du milieu poreux (16, 105, 105a à 105g) et pour conduire le liquide à travers le milieu poreux (16, 105, 105a à 105g).

**14.** Procédé selon la revendication 13, qui présente par ailleurs le fait d'arrêter la rotation du module à fluide (10) pour arrêter la circulation du liquide à travers le milieu poreux (16, 105, 105a à 105g), ou qui présente par ailleurs le fait de conduire plusieurs liquides différents l'un après l'autre à travers le milieu poreux (16, 105, 105a à 105g).

**15.** Procédé selon la revendication 13 ou 14, dans lequel la structure d'afflux (103e) présente un canal de résistance à la circulation (103e) qui présente un vérin (130) avec un segment de canal montant radialement (130a) et un segment de canal descendant radialement (130b) connecté en aval du segment de canal montant radialement (130a), dans lequel le procédé présente le fait de changer une fréquence de rotation de la rotation entre une première fréquence de rotation et une deuxième fréquence de rotation pour activer une circulation du liquide à travers le canal de résistance à la circulation (103e), et présente par ailleurs le fait de mélanger les réactifs dans le liquide dans une chambre d'afflux (102) connectée avant le canal de résistance à la circulation (103e).

R
14
16a
18
10
16
12
16b

Fig. 1

10
10
20
34
36
22
32
24
26
30

Fig. 2

R
102
106
103
107
105
104
108
109
110
R
102
20%
r1
80%
106
113
lCh
r2
rin,m
105
104
110

Fig. 3

Fig. 4

Bypassmenge in Prozent bezogen auf die Auftragsmenge
70%
60%
50%
40%
30%
20%
10%
0%
0
0,5
1
1,5
2
2,5
3
3,5
Designfaktor D

Fig. 5

R
102b
102c
102a
106
103a
103d
103b
103c
105a
105b
105c
105d
104d
104a
104c
104b
110
110
110
110
110

Fig. 6

R

105e
104
105f
105g
120

Fig. 7

R
130
102
106
132
130a
103e
130b
104
105
110

Fig. 8

R
152
150
106
154a
154b
154c
153
102g
102f
132a
132c
102e
132b
103a
103c
103b
104a
105c
104c
104b
105a
105b

Fig. 9

R
152
106
160
166a
164a
168a
162
132a
102e
103a
105a
104a
166b
164b
168b
132b
102f
103b
105b
104b
166c
164c
168c
132c
102g
103c
105c
104c

Fig. 10

180
105
104
190
106
103
111
182
Fig. 12A
180
105
185
106
103
182
104
Fig. 11
111
192
106
190
105
Fig. 12B

R
S1
S2
107
108
109
105
107b
107c

Fig. 13A

Fig. 13B

Fig. 13C

Fig. 13D

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009039239 A2
- US 20070054270 A1
- US 2014220673 A1


### In der Beschreibung aufgeführte Nicht-Patentliteratur


- **HYUNDOO HWANG.** Paper on a disc: balancing the capillary-driven flow with a centrifugal force. *Lab Chip,* 2011, 3404-3406
- **SASCHA LUTZ.** A fully integrated microfluidic platform for highly sensitive analysis of immunochemical parameters. *Analyst,* 2017, vol. 142, 4206-4214
- **M. BAHRAMI.** Pressure Drop of Fully-Developed, Laminar Flow in Microchannels of Arbitray Cross-Section. *Transactions oft he ASME,* 2006, vol. 128, 1036-1044
- **I. SCHWARZ.** System-level network simulation for robust centrifugal-microfluidic lab-on-a-chip systems. *Lab Chip,* 2016, vol. 16, 1873-1885
- **M. RICHTER.** Microchannels for applications in liquid dosing and flow-rate measurement. *Sensors and Actuators A: Physical,* 1997, vol. 62 (1-3), 480-483
- Hydraulic resistance and compliance. **H. BRUUS.** Theoretical Microfluidics. Oxford University Press, 2008, vol. 18, 71-90